# EUROPEAN PATENT SPECIFICATION

(11) **EP 1 870 584 B1**
(45) Date of publication and mention of the grant of the patent: **16.09.2009**
(21) Application number: 07110834.4
(22) Date of filing: 22.06.2007
(51) Int. Cl.: F02M 25/07, F02D 21/08, F02D 41/00

(54) **Exhaust gas recirculation device of internal combustion engine, and control method of the device**
Abgasrückführvorrichtung für einen Verbrennungsmotor und Steuerungsverfahren für die Vorrichtung
Dispositif de recyclage des gaz d'échappement dans un moteur à combustion interne et son procédé de commande

(30) Priority: 22.06.2006 JP 2006172298
(43) Date of publication of application: 26.12.2007
(73) Proprietor: TOYOTA JIDOSHA KABUSHIKI KAISHA, Toyota-shi, Aichi-ken, 471-8571 (JP)
(72) Inventor: Nakayama, Shigeki, Toyota-shi, Aichi-ken 471-8571 (JP); Matsushita, Souichi, Toyota-shi, Aichi-ken 471-8571 (JP); Nagae, Masahiro, Toyota-shi, Aichi-ken 471-8571 (JP); Murata, Hiroki, Toyota-shi, Aichi-ken 471-8571 (JP); Shimizu, Hajime, Toyota-shi, Aichi-ken 471-8571 (JP); Onishi, Tomomi, Toyota-shi, Aichi-ken 471-8571 (JP); Ohki, Hisashi, Toyota-shi, Aichi-ken 471-8571 (JP); Matsumoto, Isao, Toyota-shi, Aichi-ken 471-8571 (JP)
(74) Representative: Intes, Didier Gérard André

(56) References cited:
- WO-A-20/07085944

## Description

### BACKGROUND OF THE INVENTION

### 1. Field of the Invention

The invention relates to an exhaust gas recirculation device of an internal combustion engine, and a control method of the exhaust gas recirculation device.

### 2. Description of the Related Art

There is a known technology in which a low-pressure EGR passage that takes in a portion of exhaust gas from an exhaust passage downstream of a turbine as EGR gas and recirculates the EGR gas to an intake passage upstream of a compressor, and a high-pressure EGR passage that takes in a portion of exhaust gas from the exhaust passage upstream of the turbine as EGR gas and recirculates the EGR gas to the intake passage downstream of the compressor are provided, and in which the low-pressure EGR passage and the high-pressure EGR passage are effectively used in combination so as to lessen the exhaust emissions in a wide operation region without impairing the power performance or the control characteristics or the responsiveness of the EGR control (e.g., see Japanese Patent Application Publication No. JP-A-2004-150319).

In some cases, the mixture ratio between the amount of EGR gas that flows through the low-pressure EGR passage and the amount of EGR gas that flows through the high-pressure EGR passage varies due to production variations of the low-pressure EGR valve, the high-pressure EGR valve, etc.

### SUMMARY OF THE INVENTION

In conjunction with an exhaust gas recirculation device of an internal combustion engine and a control method of the device, it is an object of the invention to provide a technology of correcting the variation of the mixture ratio between the amount of EGR gas that flows through the low-pressure EGR passage and the amount of EGR gas that flows through the high-pressure EGR passage.

The invention provides an exhaust gas recirculation device of an internal combustion engine, including: a turbocharger having a turbine disposed on an exhaust passage of the internal combustion engine and a compressor disposed on an intake passage of the internal combustion engine; a low-pressure EGR passage that brings in a portion of exhaust gas from the exhaust passage downstream of the turbine as an EGR gas and that recirculates the EGR gas to the intake passage upstream of the compressor; a high-pressure EGR passage that brings in a portion of exhaust gas from the exhaust passage upstream of the turbine as the EGR gas and that recirculates the EGR gas to the intake passage downstream of the compressor; and intake fresh air amount measurement means for measuring an amount of fresh air taken into the internal combustion engine, wherein the exhaust gas recirculation device feedback-controls an EGR gas amount that flows through one EGR passage of either the low-pressure EGR passage or the high-pressure EGR passage in accordance with the fresh air amount measured by the intake fresh air amount measurement means, and the exhaust gas recirculation device open-loop controls the EGR gas amount that flows through the other EGR passage based on a state of operation of the internal combustion engine. The exhaust gas recirculation device is characterized by including learning correction means for setting a predetermined parameter at a reference value, and learning and correcting a relationship between the EGR gas amount that flows through the other EGR passage and a degree of opening of an appliance capable of adjusting the EGR gas amount that flows through the other EGR passage based on a predetermined detected value that is relevant to the EGR gas amount that flows through the other EGR passage when the predetermined parameter is set at the reference value.

Examples of the appliance capable of adjusting the EGR gas amount that flows through the other EGR passage include a low-pressure EGR valve, a high-pressure EGR valve, a first throttle valve, a second throttle valve, an exhaust throttle valve, a nozzle vane set of a variable geometry turbocharger, etc.

According to the invention, the EGR gas amount that flows through either one of the low-pressure EGR passage and the high-pressure EGR passage is feedback-controlled in accordance with the fresh air amount measured by the intake fresh air amount measurement means. The EGR gas amount that flows through the other EGR passages is open-loop controlled on the basis of the state of operation of the internal combustion engine.

However, due to production variations of the EGR valve and the like, the EGR gas amount through the other EGR passage subjected to the open-loop control can sometimes become an inappropriate amount, leading to the case where the mixture ratio between the EGR gas amount that flows through the low-pressure EGR passage and the EGR gas amount that flows through the high-pressure EGR passage varies depending on individual internal combustion engines.

For example, in the case where the EGR gas amount that flows through the other EGR passage subjected to the open-loop control is excessively large, the fresh air amount becomes correspondingly small, so that on the side of the one EGR passage subjected to the feedback control in accordance with the fresh air amount, for example, the EGR valve is controlled excessively to the closed side, and therefore the EGR gas amount that flows through the one EGR passage becomes excessively small.

On the other hand, in the case where the EGR gas amount that flows through the other EGR passage subjected to the open-loop control is excessively small, the fresh air amount becomes correspondingly large, so that on the side of the one EGR passage subjected to the feedback control in accordance with the fresh air amount, for example, the EGR valve is controlled excessively to the open side, and therefore, the EGR gas amount that flows through the one EGR passage becomes excessively large.

That is, the deviation from the intended amount of EGR gas in the EGR gas amount that flows through the other EGR passage subjected to the open-loop control is adjusted or compensated by increasing or decreasing the EGR gas amount that flows through the one EGR passage subjected to the feedback control. In this manner, the total EGR gas amount that flows through the low-pressure EGR passage and the high-pressure EGR passage can be made equal to a desired appropriate amount. In this case, however, the mixture ratio between the EGR gas amount that flows through the low-pressure EGR passage and the EGR gas amount that flows through the high-pressure EGR passage does not become equal to an appropriate ratio, but varies depending on individual internal combustion engines.

It is to be noted herein that the low-pressure EGR passage conducts the EGR gas that is lower in temperature than the EGR gas in the high-pressure EGR passage 41. Therefore, if the mixture ratio between the low-pressure EGR gas amount and the high-pressure EGR gas amount varies, the temperature of the intake air that contains the entire EGR gas and the fresh air taken into the internal combustion engine differs from one internal combustion engine to another. Therefore, because the intake air temperature varies, the exhaust emission quality is sometimes adversely affected depending on internal combustion engines.

Therefore, in the first aspect, the predetermined parameter is set at a reference value, and a relationship between the EGR gas amount that flows through the other EGR passage and the degree of opening of an appliance capable of adjusting the EGR gas amount that flows through the other EGR passage is learned and corrected on the basis of a predetermined detected value relevant to the EGR gas amount that flows through the other EGR passage when the predetermined parameter is set at the reference value.

Therefore, since the relationship between the EGR gas amount that flows through the other EGR passage subjected to the open-loop control and the degree of opening of the appliance capable of adjusting the EGR gas amount that flows through the other EGR passage is learned and corrected, the EGR gas amount that flows through the other EGR passage can be brought to an appropriate amount.

As the EGR gas amount that flows through the other EGR passage is made appropriate, the fresh air amount also becomes appropriate, so that the EGR valve provided on the one EGR passage subjected to the feedback control in accordance with the fresh air amount is not controlled excessively to the open or closed side. Thus, the EGR gas amount that flows through the one EGR passage also becomes appropriate.

Therefore, the variation of the mixture ratio between the EGR gas amounts that flow through the low-pressure EGR passage and through the high-pressure EGR passage is corrected, and thus the mixture ratio becomes an appropriate ratio. Therefore, the temperature of the intake air taken into the internal combustion engine becomes appropriate, so that the adverse effect on the exhaust emissions can be restrained.

In a second embodiment of the invention, the predetermined parameter that is set at the reference value is the degree of opening of the appliance capable of adjusting the EGR gas amount that flows through the low-pressure EGR passage and/or the EGR gas amount that flows through the high-pressure EGR passage, and the predetermined detected value relevant to the EGR gas amount that flows through the other EGR passage is the fresh air amount measured by the intake fresh air amount measurement means.

Examples of the appliance capable of adjusting the EGR gas amount that flows through the low-pressure EGR passage and/or the EGR gas amount that flows through the high-pressure EGR passage include the low-pressure EGR valve, the high-pressure EGR valve, the first throttle valve, the second throttle valve, the exhaust throttle valve, the nozzle vane set of the variable geometry turbocharger, etc.

Therefore, the degree of opening of the appliance capable of adjusting the EGR gas amount that flows through the low-pressure EGR passage and/or the EGR gas amount that flows through the high-pressure EGR passage can be set at a reference value, and the relationship between the EGR gas amount that flows through the other EGR passage and the degree of opening of the appliance capable of adjusting the EGR gas amount that flows through the other EGR passage can be learned and corrected on the basis of the fresh air amount measured by the intake fresh air amount measurement means when the degree of opening of the appliance is set at the reference value.

In a third embodiment of the invention, the exhaust gas recirculation device further includes intake air temperature detection means for detecting a temperature of an intake air that contains the entire EGR gas and the fresh air taken into the internal combustion engine, wherein the predetermined parameter that is set at the reference value includes an intake amount and an EGR rate that corresponds to a proportion of the EGR gas contained in the intake air, and the predetermined detected value relevant to the EGR gas amount that flows through the other EGR passage is the intake air temperature detected by the intake air temperature detection means.

Therefore, the intake air amount and the EGR rate can be set at reference values, and the relationship between the EGR gas amount that flows through the other EGR passage and the degree of opening of the appliance capable of adjusting the EGR gas amount that flows through the other EGR passage can be learned and corrected on the basis of the intake air temperature detected by the intake air temperature detection means when the setting at the reference values is done.

A fourth embodiment of the invention, the exhaust gas recirculation device further includes air-fuel ratio detection means for detecting an air-fuel ratio of a gas that contains the fresh air taken into the internal combustion engine and the EGR gas that flows through the low-pressure EGR passage, but that does not contain the EGR gas that flows through the high-pressure EGR passage, wherein the predetermined parameter that is set at the reference value includes an amount of an intake air that contains the entire EGR gas and the fresh air taken into the internal combustion engine, and an EGR rate that corresponds to a proportion of the EGR gas contained in the intake air; and the predetermined detected value relevant to the EGR gas amount that flows through the other EGR passage is the air-fuel ratio detected by the air-fuel ratio detection means.

Therefore, the intake air amount and the EGR rate can be set at reference values, and the relationship between the EGR gas amount that flows through the other EGR passage and the degree of opening of the appliance capable of adjusting the EGR gas amount that flows through the other EGR passage can be learned and corrected on the basis of the air-fuel ratio detected by the air-fuel ratio detection means when the setting at the reference values is done.

A fifth embodiment of the invention, the exhaust gas recirculation device further includes differential pressure detection means for detecting an across-valve differential pressure of an EGR valve provided on the other EGR passage, wherein the predetermined parameter that is set at the reference value includes an amount of an intake air that contains the entire EGR gas and the fresh air taken into the internal combustion engine, and an EGR rate that corresponds to a proportion of the EGR gas contained in the intake air; and the predetermined detected value relevant to the EGR gas amount that flows through the other EGR passage is the across-valve differential pressure detected by the differential pressure detection means.

Therefore, the intake air amount and the EGR rate can be set at reference values, and the relationship between the EGR gas amount that flows through the other EGR passage and the degree of opening of the appliance capable of adjusting the EGR gas amount that flows through the other EGR passage can be learned and corrected on the basis of the across-valve differential pressure detected by the differential pressure detection means when the setting at the reference values is done.

In a sixth embodiment of the invention, the predetermined parameter that is set at the reference value includes an amount of an intake air that contains the entire EGR gas and the fresh air taken into the internal combustion engine, and an EGR rate that corresponds to a proportion of the EGR gas contained in the intake air; and the predetermined detected value relevant to the EGR gas amount that flows through the other EGR passage is the degree of opening of an EGR valve that is provided on the one EGR passage.

Therefore, the intake air amount and the EGR rate can be set at reference values, and the relationship between the EGR gas amount that flows through the other EGR passage and the degree of opening of the appliance capable of adjusting the EGR gas amount that flows through the other EGR passage can be learned and corrected on the basis of the degree of opening of the EGR valve provided on the one EGR passage which occurs when the setting at the reference values is done.

A seventh embodiment of the invention, the exhaust gas recirculation device further includes intake air amount detection means for detecting an amount of an intake air that contains the entire EGR gas and the fresh air taken into the internal combustion engine, wherein the predetermined parameter that is set at the reference value includes the degree of opening of the appliance capable of adjusting the EGR gas amount that flows through the low-pressure EGR passage and/or the EGR gas amount that flows through the high-pressure EGR passage, and an EGR rate that corresponds to a proportion of the EGR gas contained in the intake air; and the predetermined detected value relevant to the EGR gas amount that flows through the other EGR passage is the intake air amount detected by the intake air amount detection means.

Therefore, the EGR rate and the degree of opening of the appliance capable of adjusting the EGR gas amount that flows through the low-pressure EGR passage and the EGR gas amount that flows through the high-pressure EGR passage can be set at reference values, and the relationship between the EGR gas amount that flows through the other EGR passage and the degree of opening of the appliance capable of adjusting the EGR gas amount that flows through the other EGR passage can be learned and corrected on the basis of the intake air amount detected by the intake air amount detection means when the setting at the reference values is done.

The invention also provides an exhaust gas recirculation method of an internal combustion engine, wherein the internal combustion engine includes: a turbocharger having a turbine disposed on an exhaust passage of the internal combustion engine and a compressor disposed on an intake passage of the internal combustion engine; a low-pressure EGR passage that brings in a portion of exhaust gas from the exhaust passage downstream of the turbine as an EGR gas and that recirculates the EGR gas to the intake passage upstream of the compressor; a high-pressure EGR passage that brings in a portion of exhaust gas from the exhaust passage upstream of the turbine as the EGR gas and that recirculates the EGR gas to the intake passage downstream of the compressor; and intake fresh air amount measurement means for measuring an amount of fresh air taken into the internal combustion engine, wherein the internal combustion engine feedback-controls an EGR gas amount that flows through one EGR passage of either the low-pressure EGR passage or the high-pressure EGR passage in accordance with the fresh air amount measured by the intake fresh air amount measurement means and open-loop controls the EGR gas amount that flows through the other EGR passage based on a state of operation of the internal combustion engine. The exhaust gas recirculation method is characterized by including the steps of:
setting a predetermined parameter at a reference value; and
learning and correcting a relationship between the EGR gas amount that flows through the other EGR passage and a degree of opening of an appliance capable of adjusting the EGR gas amount that flows through the other EGR passage based on a predetermined detected value that is relevant to the EGR gas amount that flows through the other EGR passage when the predetermined parameter is set at the reference value.

### BRIEF DESCRIPTION OF THE DRAWINGS

The foregoing and further objects, features and advantages of the invention will become apparent from the following description of example embodiments with reference to the accompanying drawings, wherein like numerals are used to represent like elements and wherein:
FIG. 1 is a diagram showing an internal combustion engine and its intake/exhaust system in accordance with Embodiment 1 of the invention;
FIG. 2 is a flowchart showing a process flow of a learning control of the degrees of opening of appliances capable of adjusting the low-pressure EGR gas amount in accordance with Embodiment 1;
FIG. 3 is a diagram showing an internal combustion engine and its intake/exhaust system in accordance with Embodiment 2;
FIG. 4 is a flowchart showing a process flow of a learning control of the degrees of opening of appliances capable of adjusting the low-pressure EGR gas amount in accordance with Embodiment 2;
FIG. 5 is a diagram showing an internal combustion engine and its intake/exhaust system in accordance with Embodiment 3;
FIG. 6 is a flowchart showing a process flow of a learning control of the degrees of opening of appliances capable of adjusting the low-pressure EGR gas amount in accordance with Embodiment 3;
FIG. 7 is a diagram showing an internal combustion engine and its intake/exhaust system in accordance with Embodiment 4;
FIG. 8 is a flowchart showing a process flow of a learning control of the degrees of opening of appliances capable of adjusting the low-pressure EGR gas amount in accordance with Embodiment 4;
FIG. 9 is a flowchart showing a process flow of a learning control of the degrees of opening of appliances capable of adjusting the low-pressure EGR gas amount in accordance with Embodiment 5; and
FIG. 10 is a flowchart showing a process flow of a learning control of the degrees of opening of appliances capable of adjusting the low-pressure EGR gas amount in accordance with Embodiment 6.

### DETAILED DESCRIPTION OF THE PREFERRED EMBODIMENTS

Concrete embodiments of the invention will be described hereinafter.

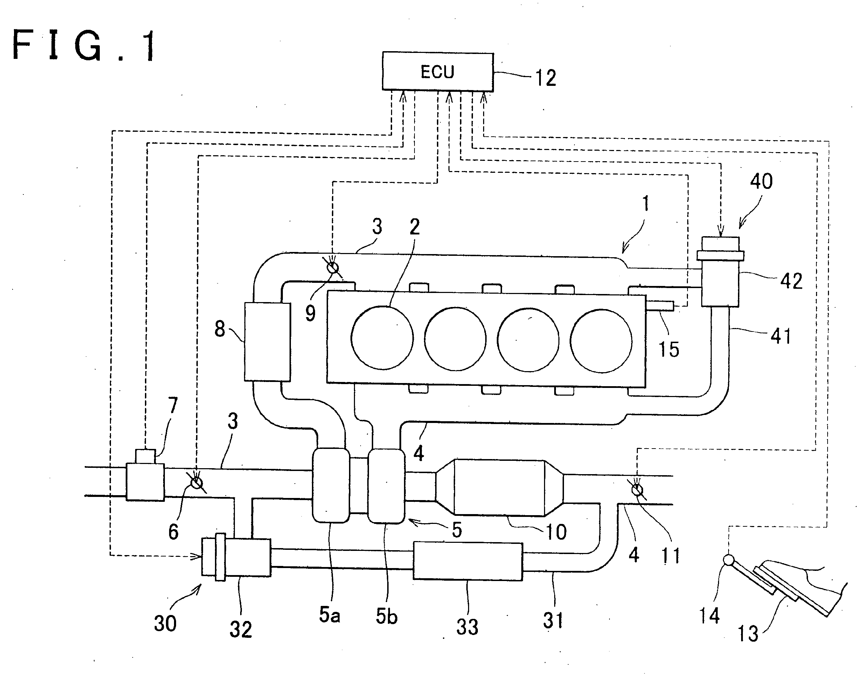

<EMBODIMENT 1> FIG. 1 is a schematic diagram showing a construction of an internal combustion engine and its intake/exhaust system to which an exhaust gas reflux device in accordance with Embodiment 1 is applied.

An internal combustion engine 1 shown in FIG. 1 is a water-cooled four-stroke diesel engine that has four cylinders 2. The internal combustion engine 1 is mounted in a vehicle. An intake passage 3 and an exhaust passage 4 are connected to the internal combustion engine 1.

An intermediate portion of the intake passage 3 connected to the internal combustion engine 1 is provided with a compressor housing 5a of a turbocharger 5 that operates using energy of exhaust gas as a drive source. The intake passage 3 upstream of the compressor housing 5a is provided with a first throttle valve 6 that adjusts the amount of flow of intake air that flows in the intake passage 3. The first throttle valve 6 is opened and closed by an electric actuator. The intake passage 3 upstream of the first throttle valve 6 is provided with an air flow meter 7 that outputs a signal corresponding to the amount of flow of intake air that flows in the intake passage 3. Using the air flow meter 7, an intake air amount of the internal combustion engine 1 is measured. In this embodiment, the air flow meter 7 corresponds to intake air amount measurement means in the invention.

The intake passage 3 downstream of the compressor housing 5a is provided with an intercooler 8 that allows heat exchange between intake air and external air. The intake passage 3 downstream of the intercooler 8 is provided with a second throttle valve 9 that adjusts the amount of flow of intake air that flows in the intake passage 3. The second throttle valve 9 is opened and closed by an electric actuator.

On the other hand, an intermediate portion of the exhaust passage 4 is provided with a turbine housing 5b of the aforementioned turbocharger 5. The exhaust passage 4 downstream of the turbine housing 5b is provided with a particulate filter (hereinafter, referred to simply as "filter") 10. The filter 10 is loaded with a storage reduction type NOx catalyst (hereinafter, referred to simply as "NOx catalyst"). The filter 10 traps particulate matter in exhaust gas. The NOx catalyst stores nitrogen oxides (NOx) in exhaust gas when the oxygen concentration in exhaust gas that flows into the NOx catalyst is high, and the NOx catalyst releases stored NOx when the oxygen concentration in exhaust gas that flows into the NOx catalyst becomes low. At that time, if a reducing component, such as hydrocarbon (HC), carbon monoxide (CO), etc., exists in exhaust gas, the NOx released from the NOx catalyst is reduced. Incidentally, instead of the NOx catalyst, an oxidation catalyst or a three-way catalyst may be supported on the filter 10.

The exhaust passage 4 downstream of the filter 10 is provided with an exhaust throttle valve 11 that adjusts the flow amount of exhaust gas that flows in the exhaust passage 4. The exhaust throttle valve 11 is opened and closed by an electric actuator.

In this embodiment, the turbocharger 5 is a variable geometry turbocharger. The variable geometry turbocharger includes a plurality of nozzle vanes disposed around a turbine that is provided within the turbine housing 5b. The nozzle vanes are opened and closed by an actuator. As the nozzle vanes are pivoted toward a closed side, the space between the adjacent nozzle vanes becomes narrower, and thus the channels between the nozzle vanes are closed. On the other hand, as the nozzle vanes are pivoted toward an open side, the spaces between the adjacent nozzle vanes become wider, and thus the channels between the nozzle vanes are opened.

In the variable geometry turbocharger 5 constructed as described above, the direction of the channel between the nozzle vanes and the space between the nozzle vanes can be changed by adjusting the direction of pivot and the amount of pivot of the nozzle vanes via an actuator. That is, by controlling the pivot direction and the pivot amount of the nozzle vanes, the direction and the flow velocity and amount of exhaust gas blown to the turbine is adjusted. Incidentally, the amount of opening of the nozzle vanes (nozzle vane set) is also referred to as "the degree of opening".

The internal combustion engine 1 is equipped with a low-pressure EGR device 30 that recirculates a portion of the exhaust gas that flows in the exhaust passage 4 to the intake passage 3. The low-pressure EGR device 30 includes a low-pressure EGR passage 31, a low-pressure EGR valve 32, and an EGR cooler 33.

The low-pressure EGR passage 31 connects the exhaust passage 4 that is downstream of the filter 10 and that is at an upstream side of the exhaust throttle valve 11, and the intake passage 3 that is upstream of the compressor housing 5a and that is at a downstream side of the first throttle valve 6. Through the low-pressure EGR passage 31, exhaust gas is recirculated at low pressure to the internal combustion engine 1. In this embodiment, the exhaust gas recirculated through the low-pressure EGR passage 31 is termed low-pressure EGR gas.

The low-pressure EGR valve 32 adjusts the amount of low-pressure EGR gas that flows through the low-pressure EGR passage 31 by adjusting the passage cross-sectional area of the low-pressure EGR passage 31. Furthermore, the low-pressure EGR cooler 33 allows heat exchange between the low-pressure EGR gas passing through the low-pressure EGR cooler 33 and the cooling water of the internal combustion engine 1 so as to lower the temperature of the low-pressure EGR gas.

Furthermore, the internal combustion engine 1 is equipped with a high-pressure EGR device 40 that recirculates a portion of the exhaust gas that flows in the exhaust passage 4, to the intake passage 3 with high pressure. The high-pressure EGR device 40 includes a high-pressure EGR passage 41, and a high-pressure EGR valve 42.

The high-pressure EGR passage 41 connects the exhaust passage 4 at the upstream side of the turbine housing 5b and the intake passage 3 at the downstream side of the compressor housing 5a. Through the high-pressure EGR passage 41, exhaust gas is recirculated at high pressure to the internal combustion engine 1. In this embodiment, the exhaust gas recirculated through the high-pressure EGR passage 41 is termed high-pressure EGR gas.

The high-pressure EGR valve 42 adjusts the amount of high-pressure EGR gas that flows through the high-pressure EGR passage 41 by adjusting the passage cross-sectional area of the high-pressure EGR passage 41.

The internal combustion engine 1 constructed as described above is equipped with an ECU 12 that is an electronic control unit for controlling the internal combustion engine 1. The ECU 12 is a unit that controls the state of operation of the internal combustion engine 1 in accordance with the operating condition of the internal combustion engine 1 and a request of a driver.

Besides, an accelerator operation amount sensor 14 that outputs an electric signal corresponding to the amount of depression of an accelerator pedal 13 caused by the driver and that is capable of detection of the engine load, and a crank position sensor 15 that detects the engine rotation speed are connected to the ECU 12 via electric wiring. The output signals of theses various sensors are input to the ECU 12.

Furthermore, the actuators of the first throttle valve 6, the second throttle valve 9, the exhaust throttle valve 11, the low-pressure EGR valve 32, the high-pressure EGR valve 42, and the nozzle vane set are connected to the ECU 12 via electric wiring. These appliances are controlled by the ECU 12.

The low-pressure EGR gas amount recirculated to the internal combustion engine 1 is adjusted by at least one of the first throttle valve 6, the exhaust throttle valve 11, the low-pressure EGR valve 32 and the nozzle vane set. The high-pressure EGR gas amount recirculated to the internal combustion engine 1 is adjusted by at least one of the second throttle valve 9, the exhaust throttle valve 11, the high-pressure EGR valve 42 and the nozzle vane set.

In Embodiment 1, using the high-pressure EGR valve 42, the high-pressure EGR gas amount is feedback-controlled in accordance with the fresh air amount measured by the air flow meter 7. Furthermore, using the low-pressure EGR valve 32, the low-pressure EGR gas amount is open-loop controlled on the basis of the state of operation of the internal combustion engine 1.

Incidentally, at least one of the first throttle valve 6, the second throttle valve 9, the exhaust throttle valve 11 and the nozzle vane set may be simultaneously used in the feedback control of the high-pressure EGR gas amount or the open-loop control of the low-pressure EGR gas amount.

At the time of the feedback control of the high-pressure EGR gas amount in accordance with the fresh air amount, the degree of opening of the high-pressure EGR valve 42 is controlled to a closed side to lessen the high-pressure EGR gas amount if the fresh air amount is small. If the fresh air amount is large, the degree of opening the high-pressure EGR valve 42 is controlled to the open side to increase the high-pressure EGR gas amount.

On the other hand, when the low-pressure EGR gas amount is open-loop controlled on the basis of the operation state of the internal combustion engine 1, the low-pressure EGR valve 32 is controlled to a degree of opening that is associated with the engine load detected by the accelerator operation amount sensor 14 and the engine rotation speed detected by the crank position sensor 15, through the use of a map obtained beforehand through experiments or the like.

Incidentally, in the case where the control as in Embodiment 1 is carried out, the mixture ratio between the low-pressure EGR gas amount and the high-pressure EGR gas amount may sometimes vary depending on individual internal combustion engines 1 since the low-pressure EGR gas amount sometimes becomes inappropriate due to production variations of the low-pressure EGR valve 32 that is used in the open-loop control of the low-pressure EGR gas amount or the like.

For example, if the low-pressure EGR gas amount, which is open-loop controlled, is excessively large, the amount of fresh air correspondingly becomes smaller, so that the high-pressure EGR valve 42, used in the feedback control of the high-pressure EGR amount in accordance with the fresh air amount, is controlled excessively to the closed side, and therefore the high-pressure EGR gas amount becomes excessively small.

If the low-pressure EGR gas amount is excessively small, on the other hand, the fresh air amount correspondingly becomes larger, so that the high-pressure EGR valve 42, used in the feedback control of the high-pressure EGR amount in accordance with the fresh air amount, is controlled excessively to the open side, and therefore the high-pressure EGR gas amount becomes excessively large.

That is, in the control in Embodiment 1, the deviation in the EGR gas amount from the intended low-pressure EGR gas amount is adjusted or compensated by increasing or decreasing the high-pressure EGR gas amount. In this manner, the total EGR gas amount that flows through the low-pressure EGR passage 31 and through the high-pressure EGR passage 41 can be made equal to a desired appropriate amount. However, the mixture ratio between the low-pressure EGR gas amount and the high-pressure EGR gas amount does not become equal to an appropriate ratio, but varies depending on individual internal combustion engines 1.

It is to be noted herein that the low-pressure EGR passage 31 conducts low-pressure EGR gas that is lower in temperature than the EGR gas that flows in the high-pressure EGR passage 41. Therefore, if the mixture ratio between the low-pressure EGR gas amount and the high-pressure EGR gas amount varies, the temperature of intake air that contains the low-pressure EGR gas, the high-pressure EGR gas and the fresh air taken into the internal combustion engine 1 differs from one internal combustion engine 1 to another. Therefore, because the intake air temperature varies, the exhaust emission quality is sometimes adversely affected depending on internal combustion engines 1.

Therefore, in Embodiment 1, the degrees of opening of appliances capable of adjusting the low-pressure EGR gas amount and/or the high-pressure EGR gas amount is set at a reference degree of opening, and a relationship between the low-pressure EGR gas amount and the degree of opening of an appliance capable of adjusting the low-pressure EGR gas amount is learned and corrected on the basis of the fresh air amount measured by the air flow meter 7 when the degree of opening is set at the reference degree of opening.

Examples of the "appliance capable of adjusting the low-pressure EGR gas amount and/or the high-pressure EGR gas amount'' include the first throttle valve 6, the second throttle valve 9, the exhaust throttle valve 11, the low-pressure EGR valve 32, the high-pressure EGR valve 42, and the nozzle vane set. Examples of the "appliance capable of adjusting the low-pressure EGR gas amount" include the first throttle valve 6, the exhaust throttle valve 11, the low-pressure EGR valve 32, and the nozzle vane set.

In Embodiment 1, at the time of learning, the reference degree of opening of the high-pressure EGR valve 42 is set at the fully closed state, and through the use of a correlation between the fresh air amount and the low-pressure EGR gas amount, the degree of opening of the appliance capable of adjusting the low-pressure EGR gas amount is learned.

Therefore, since the relationship between the low-pressure EGR gas amount and the degree of opening of the appliance capable of adjusting the low-pressure EGR gas amount is learned and corrected, the low-pressure EGR gas amount can be brought to an appropriate amount.

As the low-pressure EGR gas amount is made appropriate, the fresh air amount also becomes appropriate, so that the high-pressure EGR valve 42, used in the feedback control of the high-pressure EGR gas amount in accordance with the fresh air amount, is not controlled excessively to the open or closed side. Thus, the high-pressure EGR gas amount also becomes appropriate.

Therefore, the variation of the mixture ratio between the low-pressure EGR gas amount and the high-pressure EGR gas amount is corrected, and thus the mixture ratio becomes an appropriate ratio. Therefore, the temperature of the intake air taken into the internal combustion engine 1 does not vary, but becomes constant, so that the adverse effect on the exhaust emissions can be restrained.

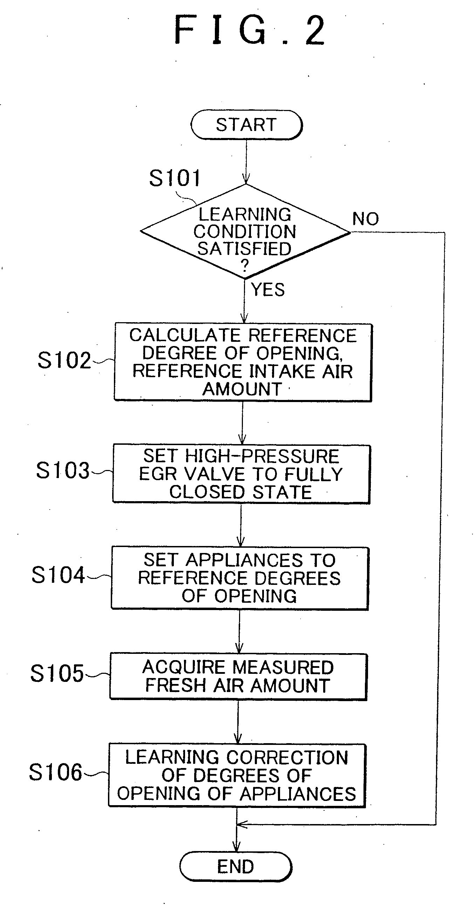

Next, a process flow of the learning control of the degrees of opening of appliances capable of adjusting the low-pressure EGR gas amount according to Embodiment 1 will be described. FIG. 2 is a flowchart showing a process flow of the learning control of the degrees of opening of appliances capable of adjusting the low-pressure EGR gas amount according to Embodiment 1. This routine is executed repeatedly at every predetermined time.

In step S101, the ECU 12 determines whether or not a learning condition has been satisfied. Whether of not the learning condition has been satisfied is determined on the basis of the engine load detected by the accelerator operation amount sensor 14, the engine rotation speed detected by the crank position sensor 15, the fresh air amount detected by the air flow meter 7, etc.

If a negative determination is made in step S101, the ECU 12 ends the present execution of this routine. On the other hand, if an affirmative determination is made in step S101, the process proceeds to step S102.

In step S102, the ECU 12 calculates, from the engine load and the engine rotation speed, the degrees of opening of the first throttle valve 6, the second throttle valve 9, the exhaust throttle valve 11, the low-pressure EGR valve 32 and the nozzle vane set that are used as references (reference degrees of opening), and the fresh air amount that is used as a reference (reference fresh air amount).

The reference degrees of opening are predetermined degrees of opening that change in accordance with the engine load and the engine rotation speed. The relationship between the engine load, the engine rotation speed and the reference degree of opening is found through experiments or the like and is represented in a map beforehand, and is pre-stored in the ECU 12. Furthermore, the reference degree of opening may also be determined, for example, as being the fully closed state.

The reference fresh air amount is the fresh air amount that is measured by the air flow meter 7 in accordance with the engine load and the engine rotation speed in the case where the first throttle valve 6, the second throttle valve 9, the exhaust throttle valve 11, the low-pressure EGR valve 32, the high-pressure EGR valve 42 and the nozzle vane set are at their reference degrees of opening, and where there is no production variation of the low-pressure EGR valve 32 or the like, and where the low-pressure EGR gas amount that is flowing is appropriate. The relationship between the engine load, the engine rotation speed and the reference fresh air amount is found through experiments or the like and represented in a map beforehand. The fresh air amount is the amount of gas that is taken from outside into the internal combustion engine.

In step S103, the ECU 12 fully closes the high-pressure EGR valve 42, which is used in the feedback control of the high-pressure EGR gas amount in accordance with the fresh air amount. For the high-pressure EGR valve 42, the fully closed state is the reference degree of opening. Thus, the high-pressure EGR gas amount is set at "0". That is, the fresh air becomes free of the effect of the high-pressure EGR gas, and is affected only by the low-pressure EGR gas. In this manner, the effect caused by the low-pressure EGR gas amount being an inappropriate amount can be obtained or detected as the amount of change in the fresh air amount.

In step S104, the ECU 12 sets the degrees of opening of the first throttle valve 6, the second throttle valve 9, the exhaust throttle valve 11, the low-pressure EGR valve 32 and the nozzle vane set to their reference degrees of opening for the time of learning.

That is, by the process of steps S102 to S104, the degrees of opening of the appliances capable of adjusting the low-pressure EGR gas amount and/or the high-pressure EGR gas amount are set to their reference degrees of opening.

In step S105, the ECU 12 measures the fresh air amount. The fresh air amount can be obtained via the air flow meter 7. The fresh air amount at this time is termed measured fresh air amount.

In step S106, the ECU 12 changes the degree of opening of at least one of the first throttle valve 6, the exhaust throttle valve 11, the low-pressure EGR valve 32 and the nozzle vane set so that the measured fresh air amount becomes equal to the reference fresh air amount. Then, the amount of change in the degree of opening which brings the measured fresh air amount equal to the reference fresh air amount is learned as a learned value. Each of the appliances that have been changed in the degree of opening in order to obtain learned values is controlled, in the subsequent control processes, through the use of the degree of opening obtained by adding the learned value to the basic control degree of opening.

That is, in step S106, a relationship between the low-pressure EGR gas amount and the degrees of opening of the appliances capable of adjusting the low-pressure EGR gas amount is learned and corrected on the basis of the measured fresh air amount measured by the air flow meter 7.

As described above, according to Embodiment 1, the degrees of opening of the appliances capable of adjusting the low-pressure EGR gas amount are able to be learned. Therefore, the low-pressure EGR gas amount can be brought to an appropriate amount. Furthermore, the variation of the mixture ratio between the low-pressure EGR gas amount and the high-pressure EGR gas amount can be corrected so that the mixture ratio becomes appropriate.

<EMBODIMENT 2> In Embodiment 2, the intake air amount and the EGR rate are set at reference values, and on the basis of the intake air temperature detected by the intake air temperature sensor 16 when the setting at the reference values is done, a relationship between the low-pressure EGR gas amount that flows through the low-pressure EGR passage 31 and the degrees of opening of the appliances capable of adjusting the low-pressure EGR gas amount is learned and corrected. Other features and the like are substantially the same as in the foregoing embodiment, and the description thereof will be omitted.

The low-pressure EGR passage 31 conducts low-pressure EGR gas that is lower in temperature than the EGR gas in the high-pressure EGR passage 41. Therefore, in Embodiment 2, the degrees of opening of appliances capable of adjusting the low-pressure EGR gas amount are learned, using a correlation between the intake air temperature and the EGR gas amount in which if the low-pressure EGR gas amount is large and the high-pressure EGR gas amount is small, the intake air temperature becomes low, and if the low-pressure EGR gas amount is small and the high-pressure EGR gas amount is large, the intake air temperature becomes high.

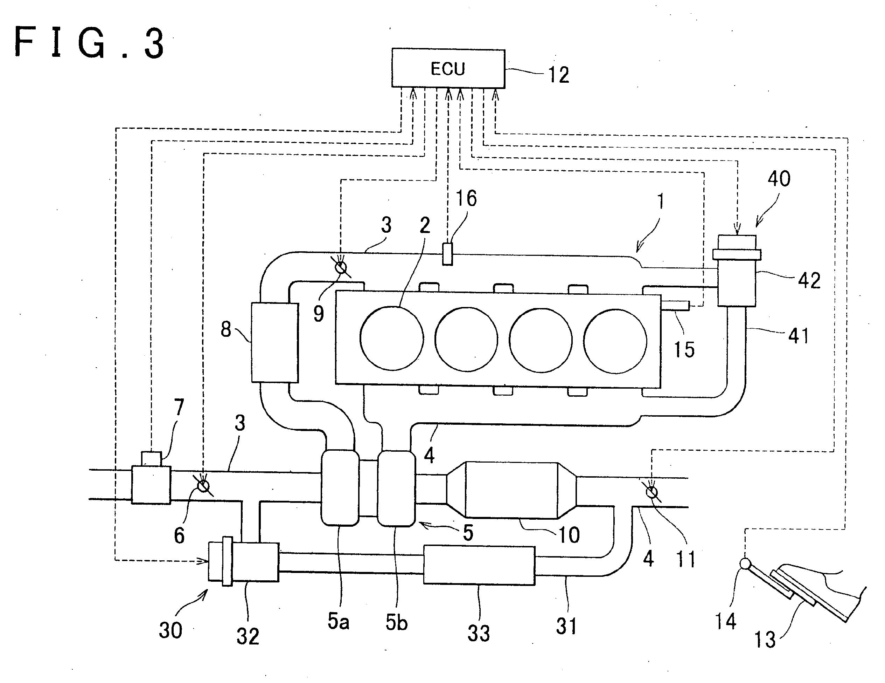

In Embodiment 2, as shown in FIG. 3, an intake air temperature sensor 16 is disposed in an intake passage 3 downstream of a second throttle valve 9. The intake air temperature sensor 16 is capable of detecting the temperature of the intake air that contains the fresh air taken into the internal combustion engine 1, the low-pressure EGR gas and the high-pressure EGR gas. In Embodiment 2, the intake air temperature sensor 16 corresponds to intake air temperature detection means in the invention.

The intake air temperature sensor 16 is connected to an ECU 12 via electric wiring so that an output signal of the intake air temperature sensor 16 is input to the ECU 12.

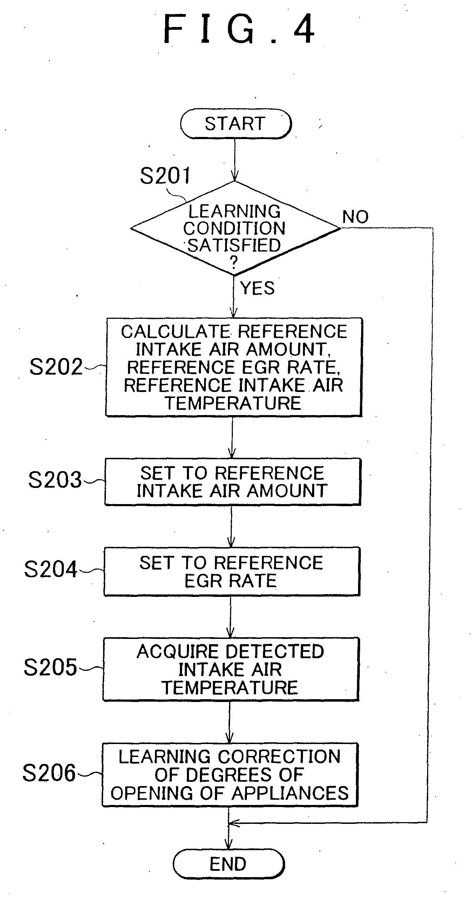

Next, a process flow of a learning control of degrees of opening of the appliances capable of adjusting the low-pressure EGR gas amount according to Embodiment 2 will be described. FIG. 4 is a flowchart showing a process flow of the learning control of the degrees of opening of appliances capable of adjusting the low-pressure EGR gas amount according to Embodiment 2. This routine is executed repeatedly at every predetermined time.

In step S201, the ECU 12 determines whether or not a learning condition has been satisfied. Whether the learning condition has been satisfied is determined on the basis of the engine load detected by the accelerator operation amount sensor 14, the engine rotation speed detected by the crank position sensor 15, the fresh air amount detected by the air flow meter 7, etc.

If a negative determination is made in step S201, the ECU 12 ends the present execution of the routine. On the other hand, if an affirmative determination is made in step S201, the process proceeds to step S202.

In step S202, the ECU 12 calculates the intake air amount that is used as a reference (reference intake air amount), the EGR rate that is used as a reference (reference EGR rate), and the intake air temperature that is used as a reference (reference intake air temperature), from the engine load and the engine rotation speed.

Incidentally, the reference intake air amount is the predetermined intake air amount that changes in accordance with the engine load and the engine rotation speed. A relationship between the engine load and the engine rotation speed and the reference intake air amount is found through experiments or the like and represented in a map beforehand, and is pre-stored in the ECU 12. The intake air amount is the amount of a gas that contains the fresh air taken into the internal combustion engine, the low-pressure EGR gas and the high-pressure EGR gas.

The reference EGR rate is the predetermined EGR rate that changes in according to the engine load and the engine rotation speed. A relationship of the engine load and the engine rotation speed with the reference EGR rate is found through experiments or the like and represented in a map beforehand, and is pre-stored in the ECU 12. Furthermore, the EGR rate is the proportion of the low-pressure EGR gas and the high-pressure EGR gas contained in the intake air.

The reference intake air temperature is the intake air temperature that is detected by the intake air temperature sensor 16 in accordance with the engine load and the engine rotation speed when the state of the internal combustion engine 1 is set at the reference intake air amount and the reference EGR rate. A relationship between the engine load and the engine rotation speed and the reference intake air temperature is found through experiments or the like and represented in a map beforehand, and is pre-stored in the ECU 12.

In step S203, the ECU 12 causes the existing intake air amount calculated from the engine load and the engine rotation speed (the existing intake air amount) to be equal to the reference intake air amount. This process is performed by changing mainly the degrees of opening of the first throttle valve 6, the second throttle valve 9, the exhaust throttle valve 11, the nozzle vane set, etc.

In step S204, the ECU 12 causes the existing EGR rate calculated from the existing intake air amount and the fresh air amount measured by the air flow meter 7 (the existing EGR rate) to be equal to the reference EGR rate. This process is performed by changing the degree of opening of the high-pressure EGR valve 42 used in the feedback control of the high-pressure EGR gas amount in accordance with the fresh air amount, and the degree of opening of the low-pressure EGR valve 32 used in the open-loop control of the low-pressure EGR gas amount on the basis of the state of operation of the internal combustion engine 1. Furthermore, in this process, the degrees of opening of the first throttle valve 6, the second throttle valve 9, the exhaust throttle valve 11, the nozzle vane set, etc., may be changed so that the high-pressure EGR valve 42 does not become fixed to the fully open state or the fully closed state, but is within a control range.

That is, by the process of steps S202 to S204, the intake air amount and the EGR rate are set at the reference values (the reference intake air amount and the reference EGR rate).

In step S205, the ECU 12 detects the intake air temperature. The intake air temperature can be obtained via the intake air temperature sensor 16. The intake air temperature at this time is termed detected intake air temperature.

In step S206, the ECU 12 changes the degree of opening of at least one of the first throttle valve 6 and the low-pressure EGR valve 32 so that the detected intake air temperature becomes equal to the reference intake air temperature. Then, the amount of change in the degree of opening which brings the detected intake air temperature equal to the reference intake air temperature is learned as a learned value. Each of the appliances that have been changed in the degree of opening in order to obtain a learned value is controlled, in the subsequent control processes, through the use of the degree of opening obtained by adding the learned value to the basic control degree of opening.

That is, by the process of step S206, the relationship between the low-pressure EGR gas amount and the degrees of opening of the appliances capable of adjusting the low-pressure EGR gas amount is learned and corrected on the basis of the intake air temperature detected by the intake air temperature sensor 16.

<EMBODIMENT 3> In Embodiment 3, the intake air amount and the EGR rate are set at reference values, and on the basis of the air-fuel ratio detected by an air-fuel ratio sensor 17 when the setting at the reference values is done, the relationship between the low-pressure EGR gas amount that flows through the low-pressure EGR passage 31 and the degrees of opening of appliances capable of adjusting the low-pressure EGR gas amount is learned and corrected. Other features and the like are substantially the same as in the foregoing embodiments, and the description thereof will be omitted.

In this embodiment, the air-fuel ratio sensor 17 detects the air-fuel ratio of a mixture gas that contains the fresh air taken into the internal combustion engine 1 and the low-pressure EGR gas but does not contain the high-pressure EGR gas. Then, using a correlation between the low-pressure EGR gas amount and the air-fuel ratio of the mixture gas made up of the fresh air and the low-pressure EGR gas, the degrees of opening of the appliances capable of adjusting the low-pressure EGR gas amount are learned.

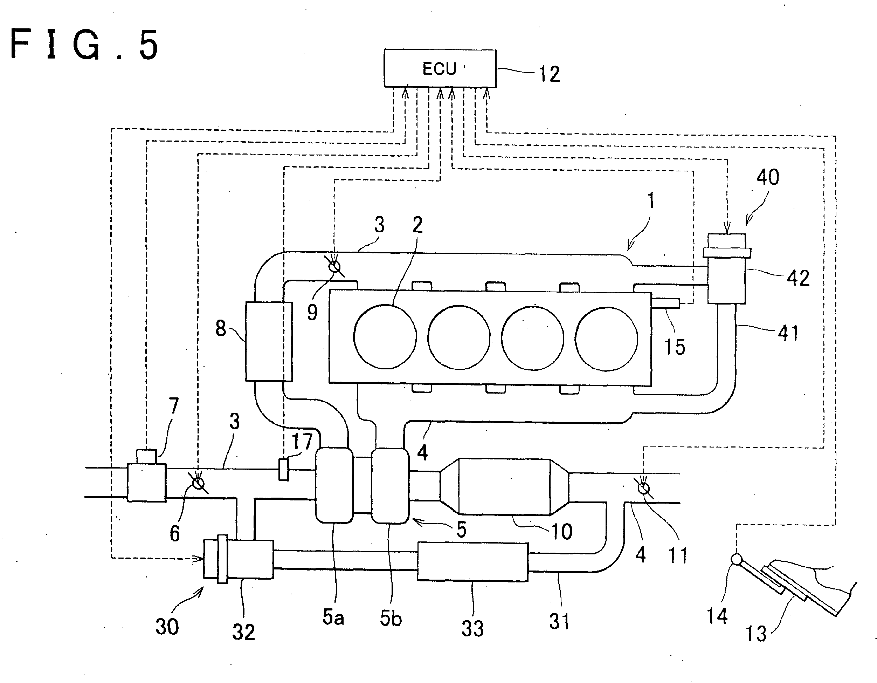

In this embodiment, as shown in FIG. 5, the air-fuel ratio sensor 17 is disposed in an intake passage 3 that is upstream of a compressor housing 5a and downstream of a site of connection with a low-pressure EGR passage 31. The air-fuel ratio sensor 17 is capable of detecting the air-fuel ratio of the mixture gas that contains the fresh air taken into the internal combustion engine 1 and the low-pressure EGR gas. In Embodiment 3, the air-fuel ratio sensor 17 corresponds to air-fuel ratio detection means in the invention.

The air-fuel ratio sensor 17 is connected to an ECU 12 via electric wiring so that an output signal of the air-fuel ratio sensor 17 is input to the ECU 12.

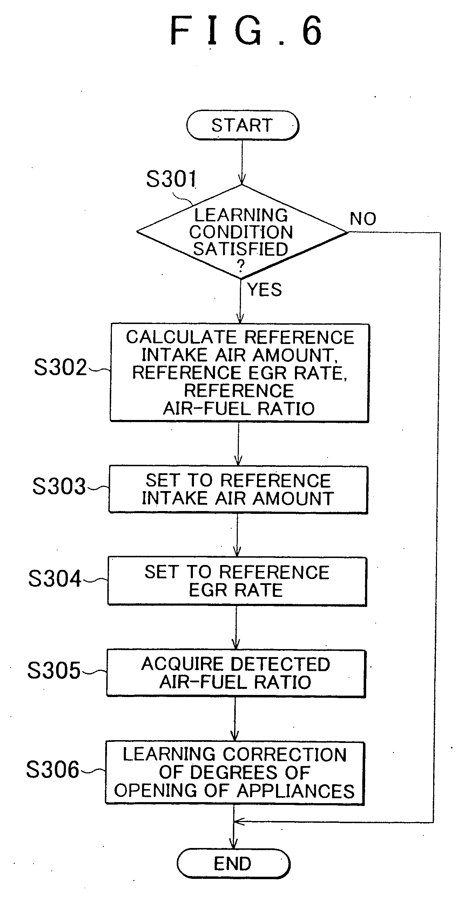

Next, a process flow of a learning control of the degrees of opening of the appliances capable of adjusting the low-pressure EGR gas amount according to Embodiment 3 will be described. FIG. 6 is a flowchart showing a process flow of the learning control of the degrees of opening of the appliances capable of adjusting the low-pressure EGR gas amount according to Embodiment 3. This routine is executed repeatedly at every predetermined time.

In step S301, the ECU 12 determines whether or not a learning condition has been satisfied. Whether the learning condition has been satisfied is determined on the basis of the engine load detected by the accelerator operation amount sensor 14, the engine rotation speed detected by the crank position sensor 15, the fresh air amount detected by the air flow meter 7, etc.

If a negative determination is made in step S301, the ECU 12 ends the present execution of the routine. On the other hand, if an affirmative determination is made in step S301, the process proceeds to step S302.

In step S302, the ECU 12 calculates the intake air amount that is used as a reference (reference intake air amount), the EGR rate that is used as a reference (reference EGR rate), and the air-fuel ratio of the mixture gas that is used as a reference (reference air-fuel ratio), from the engine load and the engine rotation speed.

The reference intake air amount and the reference EGR rate are substantially the same as in Embodiment 2.

The reference air-fuel ratio is the air-fuel ratio of the mixture gas that is detected by the air-fuel ratio sensor 17 in accordance with the engine load and the engine rotation speed when the state of the internal combustion engine 1 is set at the reference intake air amount and the reference EGR rate. A relationship between engine load and the engine rotation speed and the reference air-fuel ratio is found through experiments or the like and represented in a map beforehand, and is pre-stored in the ECU 12.

In step S303, the ECU 12 causes the existing intake air amount calculated from the engine load and the engine rotation speed (the existing intake air amount) to be equal to the reference intake air amount. This process is performed by changing the degrees of opening of the first throttle valve 6, the exhaust throttle valve 11, etc.

In step S304, the ECU 12 causes the existing EGR rate calculated from the existing intake air amount and the fresh air amount measured by the air flow meter 7 (the existing EGR rate) to be equal to the reference EGR rate. This process is performed by changing the degree of opening of the high-pressure EGR valve 42 used in the feedback control of the high-pressure EGR gas amount in accordance with the fresh air amount, and the degree of opening of the low-pressure EGR valve 32 used in the open-loop control of the low-pressure EGR gas amount on the basis of the state of operation of the internal combustion engine 1. Furthermore, in this process, the degrees of opening of the first throttle valve 6, the second throttle valve 9, the exhaust throttle valve 11, the nozzle vane set, etc., may be changed so that the high-pressure EGR valve 42 does not become fixed to the fully open state or the fully closed state, but is within a control range.

That is, by the process of steps S302 to S304, the intake air amount and the EGR rate are set at the reference values (the reference intake air amount and the reference EGR rate).

In step S305, the ECU 12 detects the air-fuel ratio of the mixture gas. The air-fuel ratio of the mixture gas can be obtained via the air-fuel ratio sensor 17. The air-fuel ratio occurring at this time is termed "detected air-fuel ratio".

In step S306, the ECU 12 changes the degree of opening of at least one of the first throttle valve 6, the exhaust throttle valve 11 and the low-pressure EGR valve 32 so that the detected air-fuel ratio becomes equal to the reference air-fuel ratio. Then, the amount of change in the degree of opening which brings the detected air-fuel ratio equal to the reference air-fuel ratio is learned as a learned value. Each appliance that has been changed in the degree of opening in order to obtain a learned value is controlled, in the subsequent control processes, through the use of the degree of opening obtained by adding the learned value to the basic control degree of opening.

That is, by the process of step S306, the relationship between the low-pressure EGR gas amount and the degrees of opening of the appliances capable of adjusting the low-pressure EGR gas amount is learned and corrected on the basis of the air-fuel ratio of the mixture gas detected by the air-fuel ratio sensor 17.

<EMBODIMENT 4> In Embodiment 4, the intake air amount and the EGR rate are set at reference values, and on the basis of the across-valve differential pressure detected by a differential pressure sensor 18 when the setting at the reference values is done, the relationship between the low-pressure EGR gas amount that flows through the low-pressure EGR passage 31 and the degrees of opening of appliances capable of adjusting the low-pressure EGR gas amount is learned and corrected. Other features and the like are substantially the same as in the foregoing embodiments, and the description thereof will be omitted.

In Embodiment 4, the differential pressure sensor 18 detects the across-valve differential pressure across a low-pressure EGR valve 32. Then, using a correlation between the across-valve differential pressure of the low-pressure EGR valve 32 and the low-pressure EGR gas amount, the degrees of opening of the appliances capable of adjusting the low-pressure EGR gas amount are learned.

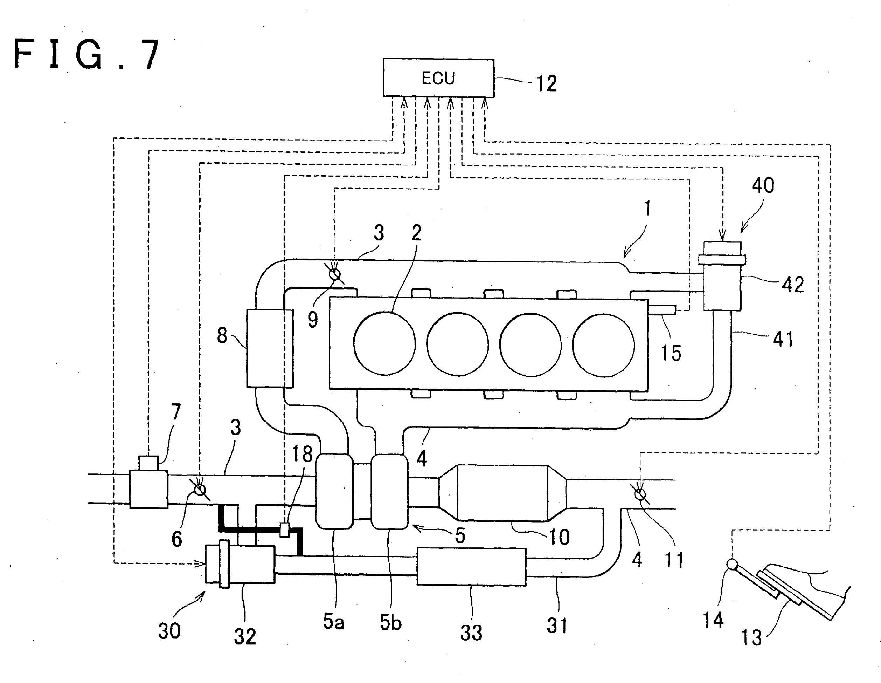

In Embodiment 4, as shown in FIG. 7, the differential pressure sensor 18 is provided astride an intake passage 3 that is downstream of a first throttle valve 6 and that is at an upstream side of a site of connection with the low-pressure EGR passage 31, and a low-pressure EGR passage 31 at an upstream side of the low-pressure EGR valve 32. The differential pressure sensor 18 is capable of detecting the pressure difference (across-valve differential pressure) across the low-pressure EGR valve 32. In Embodiment 4, the differential pressure sensor 18 corresponds to differential pressure detection means in the invention.

The differential pressure sensor 18 is connected to an ECU 12 via electric wiring so that an output signal of the differential pressure sensor 18 is input to the ECU 12.

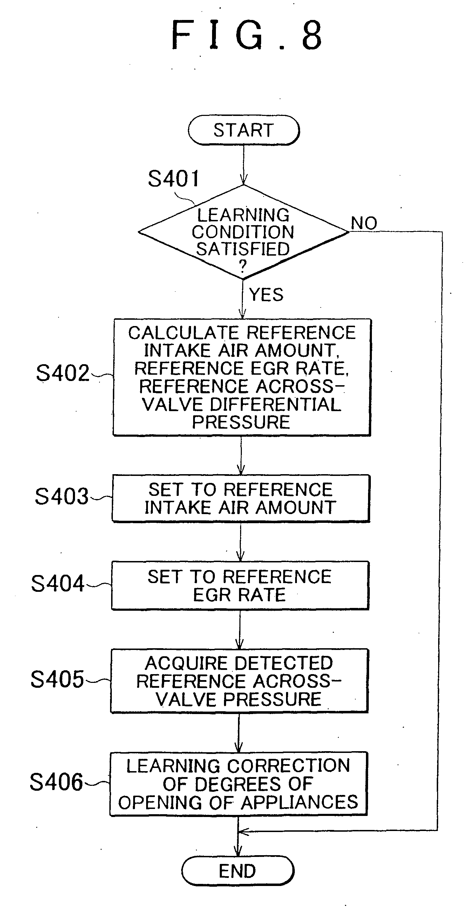

Next, a process flow of a learning control of the degrees of opening of the appliances capable of adjusting the low-pressure EGR gas amount according to Embodiment 4 will be described. FIG. 8 is a flowchart showing a process flow of the learning control of the degrees of opening of the appliances capable of adjusting the low-pressure EGR gas amount according to Embodiment 4. This routine is executed repeatedly at every predetermined time.

In step S401, the ECU 12 determines whether or not a learning condition has been satisfied. Whether the learning condition has been satisfied is determined on the basis of the engine load detected by the accelerator operation amount sensor 14, the engine rotation speed detected by the crank position sensor 15, the fresh air amount detected by the air flow meter 7, etc.

If a negative determination is made in step S401, the ECU 12 ends the present execution of the routine. On the other hand, if an affirmative determination is made in step S401, the process proceeds to step S402.

In step S402, the ECU 12 calculates the intake air amount that is used as a reference (reference intake air amount), the EGR rate that is used as a reference (reference EGR rate), and the across-valve differential pressure of the low-pressure EGR valve 32 that is used as a reference (reference across-valve differential pressure), from the engine load and the engine rotation speed.

The reference intake air amount and the reference EGR rate are substantially the same as in Embodiment 2.

The reference across-valve differential pressure is the across-valve differential pressure of the low-pressure EGR valve 32 that is detected by the differential pressure sensor 18 in accordance with the engine load and the engine rotation speed when the state of the internal combustion engine 1 is set at the reference intake air amount and the reference EGR rate. A relationship between engine load and the engine rotation speed and the reference across-valve differential pressure is found through experiments or the like and represented in a map beforehand, and is pre-stored in the ECU 12.

In step S403, the ECU 12 causes the existing intake air amount calculated from the engine load and the engine rotation speed (the existing intake air amount) to be equal to the reference intake air amount. This process is performed by changing the degrees of opening of the second throttle valve 9, the exhaust throttle valve 11, the nozzle vane set, etc.

In step S404, the ECU 12 causes the existing EGR rate calculated from the existing intake air amount and the fresh air amount measured by the air flow meter 7 (the existing EGR rate) to be equal to the reference EGR rate. This process is performed by changing the degree of opening of the high-pressure EGR valve 42 used in the feedback control of the high-pressure EGR gas amount in accordance with the fresh air amount, and the degree of opening of the low-pressure EGR valve 32 used in the open-loop control of the low-pressure EGR gas amount on the basis of the state of operation of the internal combustion engine 1. Furthermore, in this process, the degrees of opening of the first throttle valve 6, the second throttle valve 9, the exhaust throttle valve 11, the nozzle vane set, etc., may be changed so that the high-pressure EGR valve 42 does not become fixed to the fully open state or the fully closed state, but is within a control range.

That is, by the process of steps S402 to S404, the intake air amount and the EGR rate are set at the reference values (the reference intake air amount and the reference EGR rate).

In step S405, the ECU 12 detects the across-valve differential pressure of the low-pressure EGR valve 32. The across-valve differential pressure of the low-pressure EGR valve 32 can be obtained via the differential pressure sensor 18. The across-valve differential pressure occurring at this time is termed "detected across-valve differential pressure".

In step S406, the ECU 12 changes the degree of opening of at least one of the first throttle valve 6 and the exhaust throttle valve 11 so that the detected across-valve differential pressure becomes equal to the reference across-valve differential pressure. Then, the amount of change in the degree of opening which brings the detected across-valve differential pressure equal to the reference across-valve differential pressure is learned as a learned value. Each appliance that has been changed in the degree of opening in order to obtain a learned value is controlled, in the subsequent control processes, through the use of the degree of opening obtained by adding the learned value to the basic control degree of opening.

That is, by the process of step S406, the relationship between the low-pressure EGR gas amount and the degrees of opening of the appliances capable of adjusting the low-pressure EGR gas amount is learned and corrected on the basis of the across-valve differential pressure of the low-pressure EGR valve 32 detected by the differential pressure sensor 18.

<EMBODIMENT 5> In Embodiment 5, the intake air amount and the EGR rate are set at reference values, and on the basis of the degree of opening of a high-pressure EGR valve 42 occurring when the setting at the reference values is done, the relationship between the low-pressure EGR gas amount that flows through the low-pressure EGR passage 31 and the degrees of opening of appliances capable of adjusting the low-pressure EGR gas amount is learned and corrected. Other features and the like are substantially the same as in the foregoing embodiments, and the description thereof will be omitted.

In Embodiment 5, the degrees of opening the appliances capable of adjusting the low-pressure EGR gas amount is learned, using the correlation between the low-pressure EGR gas amount and the degree of opening of the high-pressure EGR valve 42 that defines the high-pressure EGR gas amount.

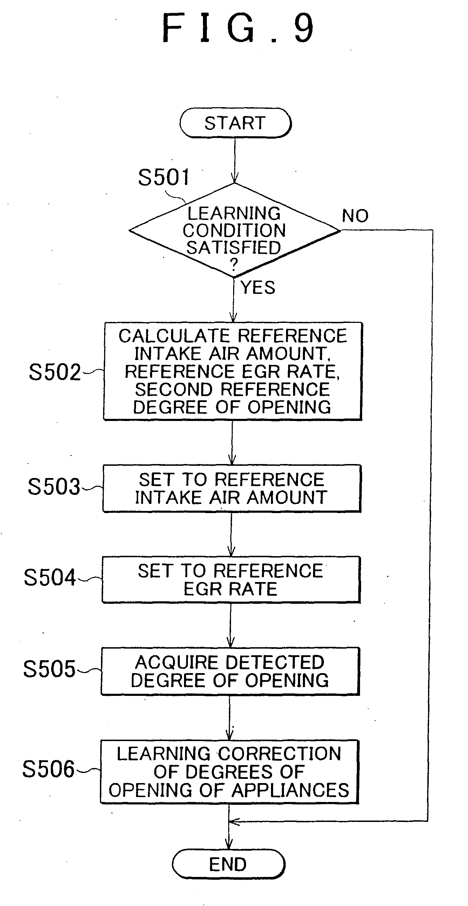

Next, a process flow of a learning control of the degrees of opening of the appliances capable of adjusting the low-pressure EGR gas amount according to Embodiment 5 will be described. FIG. 9 is a flowchart showing a process flow of the learning control of the degrees of opening of the appliances capable of adjusting the low-pressure EGR gas amount according to Embodiment 5. This routine is executed repeatedly at every predetermined time.

In step S501, the ECU 12 determines whether or not a learning condition has been satisfied. Whether the learning condition has been satisfied is determined on the basis of the engine load detected by the accelerator operation amount sensor 14, the engine rotation speed detected by the crank position sensor 15, the fresh air amount detected by the air flow meter 7, etc.

If a negative determination is made in step S501, the ECU 12 ends the present execution of the routine. On the other hand, if an affirmative determination is made in step S501, the process proceeds to step S502.

In step S502, the ECU 12 calculates the intake air amount that is used as a reference (reference intake air amount), the EGR rate that is used as a reference (reference EGR rate), and the degree of opening of the high-pressure EGR valve 42 that is used as a reference (second reference degree of opening), from the engine load and the engine rotation speed.

The reference intake air amount and the reference EGR rate are substantially the same as in Embodiment 2.

The second reference degree of opening is the degree of opening of the high-pressure EGR valve 42 that changes in accordance with the engine load and the engine rotation speed when the state of the internal combustion engine 1 is set at the reference intake air amount and the reference EGR rate. A relationship between engine load and the engine rotation speed and the second reference degree of opening is found through experiments or the like and represented in a map beforehand, and is pre-stored in the ECU 12.

In step S503, the ECU 12 causes the existing intake air amount calculated from the engine load and the engine rotation speed (the existing intake air amount) to be equal to the reference intake air amount. This process is performed by changing the nozzle vane set, and the like.

In step S504, the ECU 12 causes the existing EGR rate calculated from the existing intake air amount and the fresh air amount measured by the air flow meter 7 (the existing EGR rate) to be equal to the reference EGR rate. This process is performed by changing the degree of opening of the high-pressure EGR valve 42 used in the feedback control of the high-pressure EGR gas amount in accordance with the fresh air amount, and the degree of opening of the low-pressure EGR valve 32 used in the open-loop control of the low-pressure EGR gas amount on the basis of the state of operation of the internal combustion engine 1. Furthermore, in this process, the degrees of opening of the first throttle valve 6, the second throttle valve 9, the exhaust throttle valve 11, the nozzle vane set, etc., may be changed so that the high-pressure EGR valve 42 does not become fixed to the fully open state or the fully closed state, but is within a control range.

That is, by the process of steps S502 to S504, the intake air amount and the EGR rate are set at the reference values (the reference intake air amount and the reference EGR rate).

In step S505, the ECU 12 detects the degree of opening of the high-pressure EGR valve 42. The degree of opening of the high-pressure EGR valve 42 can be obtained by using the fresh air amount measured by the air flow meter 7 since the degree of opening of the high-pressure EGR valve 42 changes at the time of the feedback control of the high-pressure EGR gas amount in accordance with the fresh air amount. The degree of opening occurring at this time is termed "detected degree of opening".

In step S506, the ECU 12 changes the degree of opening of at least one of the first throttle valve 6, the exhaust throttle valve 11 and low-pressure EGR valve 32 so that the detected degree of opening becomes equal to the second reference degree of opening. Then, the amount of change in the degree of opening which brings the detected degree of opening equal to the second reference degree of opening is learned as a learned value. Each appliance that has been changed in the degree of opening in order to obtain a learned value is controlled, in the subsequent control processes, through the use of the degree of opening obtained by adding the learned value to the basic control degree of opening.

That is, by the process of step S506, the relationship between the low-pressure EGR gas amount and the degrees of opening of the appliances capable of adjusting the low-pressure EGR gas amount is learned and corrected on the basis of the degree of opening of the high-pressure EGR valve 42.

<EMBODIMENT 6> In Embodiment 6, the low-pressure EGR gas amount, the degrees of opening of appliances capable of adjusting the high-pressure EGR gas amount, and the EGR rate are set at reference values, and on the basis of the then-occurring intake air amount, the relationship between the low-pressure EGR gas amount that flows through the low-pressure EGR passage 31 and the degrees of opening of appliances capable of adjusting the low-pressure EGR gas amount is learned and corrected. Other features and the like are substantially the same as in the foregoing embodiments, and the description thereof will be omitted.

Since the low-pressure EGR gas is supercharged when passing through the compressor housing 5a, the low-pressure EGR gas increases the intake air amount. Therefore, in Embodiment 6, the degrees of opening of the appliances capable of adjusting the low-pressure EGR gas amount are learned by using a correlation between the intake air amount and the EGR gas amount in which if the low-pressure EGR gas amount is large and the high-pressure EGR gas amount is small, the intake air amount becomes large, and if the low-pressure EGR gas amount is small and the high-pressure EGR gas amount is large, the intake air amount becomes small.

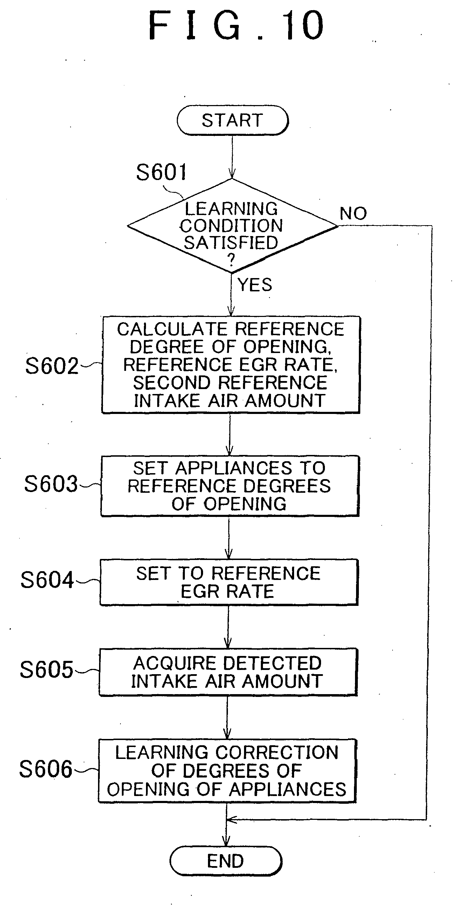

Next, a process flow of a learning control of the degrees of opening of the appliances capable of adjusting the low-pressure EGR gas amount according to Embodiment 6 will be described. FIG. 10 is a flowchart showing a process flow of the learning control of the degrees of opening of the appliances capable of adjusting the low-pressure EGR gas amount according to Embodiment 6. This routine is executed repeatedly at every predetermined time.

In step S601, the ECU 12 determines whether or not a learning condition has been satisfied. Whether the learning condition has been satisfied is determined on the basis of the engine load detected by the accelerator operation amount sensor 14, the engine rotation speed detected by the crank position sensor 15, the fresh air amount detected by the air flow meter 7, etc.

If a negative determination is made in step S601, the ECU 12 ends the present execution of the routine. On the other hand, if an affirmative determination is made in step S601, the process proceeds to step S602.

In step S602, the ECU 12 calculates the degrees of opening of the first throttle valve 6, the second throttle valve 9, the exhaust throttle valve 11, the low-pressure EGR valve 32 and the nozzle vane set that are used as references (reference degrees of opening) as well as the EGR rate that is used as a reference (reference EGR rate), and the intake air amount that is used as a reference (second reference intake air amount), from the engine load and the engine rotation speed.

The reference degrees of opening are substantially the same as in Embodiment 1, and the reference EGR rate is substantially the same as in Embodiment 2.

The second reference intake air amount is the intake air amount that changes in accordance with the engine load and the engine rotation speed when the state of the internal combustion engine 1 is set at the reference intake air amount and the reference EGR rate. A relationship between engine load and the engine rotation speed and the second reference intake air amount is found through experiments or the like and represented in a map beforehand, and is pre-stored in the ECU 12.

In step S603, the ECU 12 sets the degrees of opening of the first throttle valve 6, the second throttle valve 9, the exhaust throttle valve 11, the low-pressure EGR valve 32 and the nozzle vane set as reference degrees of opening for the time of learning.

In step S604, the ECU 12 causes the existing EGR rate calculated from the intake air amount occurring after the process of step S603 and the fresh air amount measured by the air flow meter 7 (the existing EGR rate) to be equal to the reference EGR rate. This process is performed by changing the degree of opening of the high-pressure EGR valve 42 used in the feedback control of the high-pressure EGR gas amount in accordance with the fresh air amount, and the degree of opening of the low-pressure EGR valve 32 used in the open-loop control of the low-pressure EGR gas amount on the basis of the state of operation of the internal combustion engine 1. Furthermore, in this process, the degrees of opening of the first throttle valve 6, the second throttle valve 9, the exhaust throttle valve 11, the nozzle vane set, etc., may be changed so that the high-pressure EGR valve 42 does not become fixed to the fully open state or the fully closed state, but is within a control range.

That is, by the process of steps S602 to S604, the degrees of opening of the appliances capable of adjusting the low-pressure EGR gas amount and/or the high-pressure EGR gas amount, and the EGR rate are set at the reference values (the reference degrees of opening and the reference EGR rate).

In step S605, the ECU 12 calculates the intake air amount. The intake air amount is calculated from the engine load and the engine rotation speed. The degree of opening occurring at this time is termed detected degree of opening. In this embodiment, the ECU 12 calculating the intake air amount from the engine load and the engine rotation speed corresponds to intake air amount detection means in the invention.

In step S606, the ECU 12 changes the degree of opening of at least one of the first throttle valve 6, the exhaust throttle valve 11 and low-pressure EGR valve 32 so that the detected intake air amount becomes equal to the second reference intake air amount. Then, the amount of change in the degree of opening which brings the detected intake air amount equal to the second reference intake air amount is learned as a learned value. Each appliance that has been changed in the degree of opening in order to obtain a learned value is controlled, in the subsequent control processes, through the use of the degree of opening obtained by adding the learned value to the basic control degree of opening.

That is, by the process of step S606, the relationship between the low-pressure EGR gas amount and the degrees of opening of the appliances capable of adjusting the low-pressure EGR gas amount is learned and corrected on the basis of the intake air amount.

According to the embodiments in the invention, in the exhaust gas recirculation device of the internal combustion engine, the variation of the mixture ratio between the EGR gas amounts that flow through the low-pressure EGR passage and through the high-pressure EGR passage can be corrected.

The exhaust gas recirculation device of the internal combustion engine in accordance with the invention is not limited to the foregoing embodiments, but may be modified in various manners without departing from the scope of the independent claims.

## Claims

1. An exhaust gas recirculation device of an internal combustion engine, including: a turbocharger (5) having a turbine (5b) disposed on an exhaust passage (4) of the internal combustion engine and a compressor (5a) disposed on an intake passage (3) of the internal combustion engine; a low-pressure EGR passage (31) that brings in a portion of exhaust gas from the exhaust passage (4) downstream of the turbine (5b) as an EGR gas and that recirculates the EGR gas to the intake passage (3) upstream of the compressor (5a); a high-pressure EGR passage (41) that brings in a portion of exhaust gas from the exhaust passage (4) upstream of the turbine (5b) as the EGR gas and that recirculates the EGR gas to the intake passage (3) downstream of the compressor (5a); and intake fresh air amount measurement means (7) for measuring an amount of fresh air taken into the internal combustion engine, wherein the exhaust gas recirculation device feedback-controls an EGR gas amount that flows through one EGR passage of either the low-pressure EGR passage (31) or the high-pressure EGR passage (41) in accordance with the fresh air amount measured by the intake fresh air amount measurement means (7), and the exhaust gas recirculation device open-loop controls the EGR gas amount that flows through the other EGR passage based on a state of operation of the internal combustion engine, the exhaust gas recirculation device **characterized by** comprising:
learning correction means for setting a predetermined parameter at a reference value, and learning and correcting a relationship between the EGR gas amount that flows through the other EGR passage and a degree of opening of an appliance capable of adjusting the EGR gas amount that flows through the other EGR passage based on a predetermined detected value that is relevant to the EGR gas amount that flows through the other EGR passage when the predetermined parameter is set at the reference value.

2. The exhaust gas recirculation device according to claim 1, wherein the predetermined parameter that is set at the reference value is the degree of opening of the appliance capable of adjusting the EGR gas amount that flows through the low-pressure EGR passage (31) and/or the EGR gas amount that flows through the high-pressure EGR passage (41), and the predetermined detected value relevant to the EGR gas amount that flows through the other EGR passage is the fresh air amount measured by the intake fresh air amount measurement means (7).

3. The exhaust gas recirculation device according to claim 2, wherein when the predetermined parameter is set at the reference value, the degree of opening of an EGR valve provided on the one EGR passage is fully closed.

4. The exhaust gas recirculation device according to claim 1, further comprising:
intake air temperature detection means (16) for detecting a temperature of an intake air that contains the entire EGR gas and the fresh air taken into the internal combustion engine,
wherein the predetermined parameter that is set at the reference value includes an intake amount and an EGR rate that corresponds to a proportion of the EGR gas contained in the intake air, and the predetermined detected value relevant to the EGR gas amount that flows through the other EGR passage is the intake air temperature detected by the intake air temperature detection means (16).

5. The exhaust gas recirculation device according to claim 1, further comprising:
air-fuel ratio detection means (17) for detecting an air-fuel ratio of a gas that contains the fresh air taken into the internal combustion engine and the EGR gas that flows through the low-pressure EGR passage (31), but that does not contain the EGR gas that flows through the high-pressure EGR passage (41),
wherein the predetermined parameter that is set at the reference value includes an amount of an intake air that contains the entire EGR gas and the fresh air taken into the internal combustion engine, and an EGR rate that corresponds to a proportion of the EGR gas contained in the intake air; and the predetermined detected value relevant to the EGR gas amount that flows through the other EGR passage is the air-fuel ratio detected by the air-fuel ratio detection means (17).

6. The exhaust gas recirculation device according to claim 1, further comprising:
differential pressure detection means (18) for detecting an across-valve differential pressure of an EGR valve provided on the other EGR passage,
wherein the predetermined parameter that is set at the reference value includes an amount of an intake air that contains the entire EGR gas and the fresh air taken into the internal combustion engine, and an EGR rate that corresponds to a proportion of the EGR gas contained in the intake air; and the predetermined detected value relevant to the EGR gas amount that flows through the other EGR passage is the across-valve differential pressure detected by the differential pressure detection means (18).

7. The exhaust gas recirculation device according to claim 1, wherein the predetermined parameter that is set at the reference value includes an amount of an intake air that contains the entire EGR gas and the fresh air taken into the internal combustion engine, and an EGR rate that corresponds to a proportion of the EGR gas contained in the intake air; and the predetermined detected value relevant to the EGR gas amount that flows through the other EGR passage is the degree of opening of an EGR valve that is provided on the one EGR passage.

8. The exhaust gas recirculation device according to claim 1, further comprising:
intake air amount detection means (12) for detecting an amount of an intake air that contains the entire EGR gas and the fresh air taken into the internal combustion engine,
wherein the predetermined parameter that is set at the reference value includes the degree of opening of the appliance capable of adjusting the EGR gas amount that flows through the low-pressure EGR passage (31) and/or the EGR gas amount that flows through the high-pressure EGR passage (41), and an EGR rate that corresponds to a proportion of the EGR gas contained in the intake air; and the predetermined detected value relevant to the EGR gas amount that flows through the other EGR passage is the intake air amount detected by the intake air amount detection means (12).

9. The exhaust gas recirculation device according to any one of claims 4 to 8, wherein when the predetermined parameter is set at the reference value, the degree of opening of an EGR valve provided on the one EGR passage is set at an intermediate degree of opening.

10. The exhaust gas recirculation device according to any one of claims 1 to 9, wherein the learning correction means causes the predetermined detected value relevant to the EGR gas amount that flows through the other EGR passage to be equal to the reference value, and learns and corrects, as a learned correction value, an amount of change in the degree of opening of the appliance capable of adjusting the EGR gas amount that flows through the other EGR passage.

11. The exhaust gas recirculation device according to any one of claims 1 to 10, wherein the one EGR passage is the high-pressure EGR passage (41), and the other EGR passage is the low-pressure EGR passage (31).

12. An exhaust gas recirculation method of an internal combustion engine, wherein the internal combustion engine includes: a turbocharger (5) having a turbine (5b) disposed on an exhaust passage (4) of the internal combustion engine and a compressor (5a) disposed on an intake passage (3) of the internal combustion engine; a low-pressure EGR passage (31) that brings in a portion of exhaust gas from the exhaust passage (4) downstream of the turbine (5b) as an EGR gas and that recirculates the EGR gas to the intake passage (3) upstream of the compressor (5a); a high-pressure EGR passage (41) that brings in a portion of exhaust gas from the exhaust passage (4) upstream of the turbine (5b) as the EGR gas and that recirculates the EGR gas to the intake passage (3) downstream of the compressor (5a); and intake fresh air amount measurement means (7) for measuring an amount of fresh air taken into the internal combustion engine, wherein the internal combustion engine feedback-controls an EGR gas amount that flows through one EGR passage of either the low-pressure EGR passage (31) or the high-pressure EGR passage (41) in accordance with the fresh air amount measured by the intake fresh air amount measurement means (7) and open-loop controls the EGR gas amount that flows through the other EGR passage based on a state of operation of the internal combustion engine, the exhaust gas recirculation method **characterized by** comprising:
setting a predetermined parameter at a reference value; and
learning and correcting a relationship between the EGR gas amount that flows through the other EGR passage and a degree of opening of an appliance capable of adjusting the EGR gas amount that flows through the other EGR passage based on a predetermined detected value that is relevant to the EGR gas amount that flows through the other EGR passage when the predetermined parameter is set at the reference value.

13. The exhaust gas recirculation method according to claim 12, wherein the predetermined parameter that is set at the reference value is the degree of opening of the appliance capable of adjusting the EGR gas amount that flows through the low-pressure EGR passage (31) and/or the high-pressure EGR passage (41), and the predetermined detected value relevant to the EGR gas amount that flows through the other EGR passage is the fresh air amount measured by the intake fresh air amount measurement means (7).

14. The exhaust gas recirculation method according to claim 13, wherein when the predetermined parameter is set at the reference value, the degree of opening of an EGR valve provided on the one EGR passage is fully closed.

15. The exhaust gas recirculation method according to claim 12, further comprising: (S205) detecting a temperature of an intake air that contains the entire EGR gas and the fresh air taken into the internal combustion engine,
wherein the predetermined parameter that is set at the reference value includes an intake amount and an EGR rate that corresponds to a proportion of the EGR gas contained in the intake air, and the predetermined detected value relevant to the EGR gas amount that flows through the other EGR passage is the temperature of the intake air that contains the entire EGR gas and the fresh air taken into the internal combustion engine.

16. The exhaust gas recirculation method according to claim 12, further comprising: (S305) detecting an air-fuel ratio of a gas that contains the fresh air taken into the internal combustion engine and the EGR gas that flows through the low-pressure EGR passage (31), but that does not contain the EGR gas that flows through the high-pressure EGR passage (41),
wherein the predetermined parameter that is set at the reference value includes an amount of an intake air that contains the entire EGR gas and the fresh air taken into the internal combustion engine, and an EGR rate that corresponds to a proportion of the EGR gas contained in the intake air; and the predetermined detected value relevant to the EGR gas amount that flows through the other EGR passage is the air-fuel ratio of the gas that contains the fresh air taken into the internal combustion engine and the EGR gas that flows through the low-pressure EGR passage (31), but that does not contain the EGR gas that flows through the high-pressure EGR passage (41).

17. The exhaust gas recirculation method according to claim 12, further comprising: (S405) detecting an across-valve differential pressure of an EGR valve provided on the other EGR passage,
wherein the predetermined parameter that is set at the reference value includes an amount of an intake air that contains the entire EGR gas and the fresh air taken into the internal combustion engine, and an EGR rate that corresponds to a proportion of the EGR gas contained in the intake air; and the predetermined detected value relevant to the EGR gas amount that flows through the other EGR passage is the across-valve differential pressure provided on the other EGR passage.

18. The exhaust gas recirculation method according to claim 12, wherein the predetermined parameter that is set at the reference value includes an amount of an intake air that contains the entire EGR gas and the fresh air taken into the internal combustion engine, and an EGR rate that corresponds to a proportion of the EGR gas contained in the intake air; and the predetermined detected value relevant to the EGR gas amount that flows through the other EGR passage is the degree of opening of an EGR valve that is provided on the one EGR passage.

19. The exhaust gas recirculation method according to claim 12, further comprising: (S605) detecting an amount of an intake air that contains the entire EGR gas and the fresh air taken into the internal combustion engine,
wherein the predetermined parameter that is set at the reference value includes the degree of opening of the appliance capable of adjusting the EGR gas amount that flows through the low-pressure EGR passage (31) and/or the high-pressure EGR passage (41), and an EGR rate that corresponds to a proportion of the EGR gas contained in the intake air; and the predetermined detected value relevant to the EGR gas amount that flows through the other EGR passage is the intake air amount that contains the entire EGR gas and the fresh air taken into the internal combustion engine.

20. The exhaust gas recirculation method according to any one of claims 15 to 19,
wherein when the predetermined parameter is set at the reference value, the degree of opening of an EGR valve provided on the one EGR passage is set at an intermediate degree of opening.

21. The exhaust gas recirculation method according to any one of claims 12 to 20, wherein in the learning correction step, the predetermined detected value relevant to the EGR gas amount that flows through the other EGR passage is caused to be equal to the reference value, and an amount of change in the degree of opening of the appliance capable of adjusting the EGR gas amount that flows through the other EGR passage is learned and corrected as a learned correction value.

22. The exhaust gas recirculation method according to any one of claims 12 to 21,
wherein the one EGR passage is the high-pressure EGR passage (41), and the other EGR passage is the low-pressure EGR passage (31).

## Patentansprüche

1. Abgasrückführeinrichtung einer Brennkraftmaschine, welche aufweist: einen Turbolader (5) mit einer Turbine (5b), die an einem Abgaskanal (4) der Brennkraftmaschine angeordnet ist, und einem Kompressor (5a), der an einem Ansaugkanal (3) der Brennkraftmaschine angeordnet ist, einen Niederdruck-AGR-Kanal (31), welcher einen Teil der Abgase aus dem Abgaskanal (4) stromabwärts der Turbine (5b) als ein AGR-Gas aufnimmt und welcher das AGR-Gas in den Ansaugkanal (3) stromaufwärts des Kompressors (5a) rückführt, einen Hochdruck-AGR-Kanal (41), welcher einen Teil der Abgase aus dem Abgaskanal (4) stromaufwärts der Turbine (5b) als das AGR-Gas aufnimmt und welcher das AGR-Gas in den Ansaugkanal (3) stromabwärts des Kompressors (5a) rückführt, und Ansaugfrischluftmengen-Meßmittel (7) zum Messen einer Menge von Frischluft, die in die Brennkraftmaschine gesaugt wird, wobei die Abgasrückführeinrichtung eine Rückführregelung einer AGR-Gasmenge durchführt, welche durch einen AGR-Kanal strömt, bei dem es sich entweder um den Niederdruck-AGR-Kanal (31) oder um den Hochdruck-AGR-Kanal (41) handelt, entsprechend der Frischluftmenge, die von den Ansaugfrischluftmengen-Meßmitteln (7) gemessen wird, und die Abgasrückführeinrichtung eine rückführungslose Steuerung der AGR-Gasmenge, welche durch den anderen AGR-Kanal strömt, auf der Basis eines Betriebszustands der Brennkraftmaschine durchführt, wobei die Abgasrückführeinrichtung **dadurch gekennzeichnet ist, daß** sie umfaßt:
lernende Korrekturmittel zum Einstellen eines vorbestimmten Parameters auf einen Referenzwert, und Lernen und Korrigieren einer Beziehung zwischen der AGR-Gasmenge, welche durch den anderen AGR-Kanal strömt, und einem Öffnungsgrad einer Einrichtung, die in der Lage ist, die AGR-Gasmenge, welche durch den anderen AGR-Kanal strömt, basierend auf einem vorbestimmten detektierten Wert einzustellen, welcher für die AGR-Gasmenge relevant ist, welche durch den anderen AGR-Kanal strömt, wenn der vorbestimmte Parameter auf den Referenzwert eingestellt ist.

2. Abgasrückführeinrichtung nach Anspruch 1, wobei der vorbestimmte Parameter, welcher auf den Referenzwert eingestellt wird, der Öffnungsgrad der Einrichtung ist, die in der Lage ist, die AGR-Gasmenge, welche durch den Niederdruck-AGR-Kanal (31) strömt, und/oder die AGR-Gasmenge, welche durch den Hochdruck-AGR-Kanal (41) strömt, einzustellen, und der vorbestimmte detektierte Wert, der für die AGR-Gasmenge relevant ist, welche durch den anderen AGR-Kanal strömt, die Frischluftmenge ist, die von den Ansaugfrischluftmengen-Meßmitteln (7) gemessen wird.

3. Abgasrückführeinrichtung nach Anspruch 2, wobei, wenn der vorbestimmte Parameter auf den Referenzwert eingestellt ist, der Öffnungsgrad eines AGR-Ventils, das an dem einen AGR-Kanal vorgesehen ist, vollständig geschlossen ist.

4. Abgasrückführeinrichtung nach Anspruch 1, ferner umfassend:
Ansauglufttemperatur-Detektionsmittel (16) zum Detektieren einer Temperatur einer Ansaugluft, welche das gesamte AGR-Gas und die in die Brennkraftmaschine angesaugte Frischluft enthält,
wobei der vorbestimmte Parameter, welcher auf den Referenzwert eingestellt wird, eine Ansaugmenge und eine AGR-Rate, welche einem Anteil des in der Ansaugluft enthaltenen AGR-Gases entspricht, beinhaltet, und der vorbestimmte detektierte Wert, der für die AGR-Gasmenge relevant ist, welche durch den anderen AGR-Kanal strömt, die Ansauglufttemperatur ist, die von den Ansauglufttemperatur-Detektionsmitteln (16) detektiert wird.

5. Abgasrückführeinrichtung nach Anspruch 1, ferner umfassend:
Luft-Kraftstoff-Verhältnis-Detektionsmittel (17) zum Detektieren eines Luft-Kraftstoff-Verhältnisses eines Gases, welches die in die Brennkraftmaschine angesaugte Frischluft und das AGR-Gas, welches durch den Niederdruck-AGR-Kanal (31) strömt, enthält, welches jedoch nicht das AGR-Gas enthält, welches durch den Hochdruck-AGR-Kanal (41) strömt,
wobei der vorbestimmte Parameter, welcher auf den Referenzwert eingestellt wird, eine Menge einer Ansaugluft, welche das gesamte AGR-Gas und die in die Brennkraftmaschine angesaugte Frischluft enthält, und eine AGR-Rate, welche einem Anteil des in der Ansaugluft enthaltenen AGR-Gases entspricht, beinhaltet, und der vorbestimmte detektierte Wert, der für die AGR-Gasmenge relevant ist, welche durch den anderen AGR-Kanal strömt, das Luft-Kraftstoff-Verhältnis ist, das von den Luft-Kraftstoff-Verhältnis-Detektionsmitteln (17) detektiert wird.

6. Abgasrückführeinrichtung nach Anspruch 1, ferner umfassend:
Druckdifferenz-Detektionsmittel (18) zum Detektieren einer Druckdifferenz über dem Ventil bei einem AGR-Ventil, das an dem anderen AGR-Kanal vorgesehen ist,
wobei der vorbestimmte Parameter, welcher auf den Referenzwert eingestellt wird, eine Menge einer Ansaugluft, welche das gesamte AGR-Gas und die in die Brennkraftmaschine angesaugte Frischluft enthält, und eine AGR-Rate, welche einem Anteil des in der Ansaugluft enthaltenen AGR-Gases entspricht, beinhaltet, und der vorbestimmte detektierte Wert, der für die AGR-Gasmenge relevant ist, welche durch den anderen AGR-Kanal strömt, die Druckdifferenz über dem Ventil ist, die von den Druckdifferenz-Detektionsmitteln (18) detektiert wird.

7. Abgasrückführeinrichtung nach Anspruch 1, wobei der vorbestimmte Parameter, welcher auf den Referenzwert eingestellt wird, eine Menge einer Ansaugluft, welche das gesamte AGR-Gas und die in die Brennkraftmaschine angesaugte Frischluft enthält, und eine AGR-Rate, welche einem Anteil des in der Ansaugluft enthaltenen AGR-Gases entspricht, beinhaltet, und der vorbestimmte detektierte Wert, der für die AGR-Gasmenge relevant ist, welche durch den anderen AGR-Kanal strömt, der Öffnungsgrad eines AGR-Ventils ist, welches an dem einen AGR-Kanal vorgesehen ist.

8. Abgasrückführeinrichtung nach Anspruch 1, ferner umfassend:
Ansaugluftmengen-Detektionsmittel (12) zum Detektieren einer Menge einer Ansaugluft, welche das gesamte AGR-Gas und die in die Brennkraftmaschine angesaugte Frischluft enthält,
wobei der vorbestimmte Parameter, welcher auf den Referenzwert eingestellt wird, den Öffnungsgrad der Einrichtung, die in der Lage ist, die AGR-Gasmenge, welche durch den Niederdruck-AGR-Kanal (31) strömt, und/oder die AGR-Gasmenge, welche durch den Hochdruck-AGR-Kanal (41) strömt, einzustellen, und eine AGR-Rate, welche einem Anteil des in der Ansaugluft enthaltenen AGR-Gases entspricht, beinhaltet, und der vorbestimmte detektierte Wert, der für die AGR-Gasmenge relevant ist, welche durch den anderen AGR-Kanal strömt, die Ansaugluftmenge ist, die von den Ansaugluftmengen-Detektionsmitteln (12) detektiert wird.

9. Abgasrückführeinrichtung nach einem der Ansprüche 4 bis 8, wobei, wenn der vorbestimmte Parameter auf den Referenzwert eingestellt ist, der Öffnungsgrad eines AGR-Ventils, das an dem einen AGR-Kanal vorgesehen ist, auf eine mittleren Öffnungsgrad eingestellt ist.

10. Abgasrückführeinrichtung nach einem der Ansprüche 1 bis 9, wobei das lernende Korrekturmittel bewirkt, daß der vorbestimmte detektierte Wert, der für die AGR-Gasmenge relevant ist, welche durch den anderen AGR-Kanal strömt, gleich dem Referenzwert ist, und als einen gelernten Korrekturwert eine Größe der Änderung des Öffnungsgrades der Einrichtung, die in der Lage ist, die AGR-Gasmenge einzustellen, welche durch den anderen AGR-Kanal strömt, lernt und korrigiert.

11. Abgasrückführeinrichtung nach einem der Ansprüche 1 bis 10, wobei der eine AGR-Kanal der Hochdruck-AGR-Kanal (41) ist und der andere AGR-Kanal der Niederdruck-AGR-Kanal (31) ist.

12. Abgasrückführverfahren einer Brennkraftmaschine, wobei die Brennkraftmaschine aufweist: einen Turbolader (5) mit einer Turbine (5b), die an einem Abgaskanal (4) der Brennkraftmaschine angeordnet ist, und einem Kompressor (5a), der an einem Ansaugkanal (3) der Brennkraftmaschine angeordnet ist, einen Niederdruck-AGR-Kanal (31), welcher einen Teil der Abgase aus dem Abgaskanal (4) stromabwärts der Turbine (5b) als ein AGR-Gas aufnimmt und welcher das AGR-Gas in den Ansaugkanal (3) stromaufwärts des Kompressors (5a) rückführt, einen Hochdruck-AGR-Kanal (41), welcher einen Teil der Abgase aus dem Abgaskanal (4) stromaufwärts der Turbine (5b) als das AGR-Gas aufnimmt und welcher das AGR-Gas in den Ansaugkanal (3) stromabwärts des Kompressors (5a) rückführt, und Ansaugfrischluftmengen-Meßmittel (7) zum Messen einer Menge von Frischluft, die in die Brennkraftmaschine angesaugt wird, wobei die Brennkraftmaschine eine Rückführregelung einer AGR-Gasmenge durchführt, welche durch einen AGR-Kanal strömt, bei dem es sich entweder um den Niederdruck-AGR-Kanal (31) oder um den Hochdruck-AGR-Kanal (41) handelt, entsprechend der Frischluftmenge, die von den Ansaugfrischluftmengen-Meßmitteln (7) gemessen wird, und eine rückführungslose Steuerung der AGR-Gasmenge, welche durch den anderen AGR-Kanal strömt, auf der Basis eines Betriebszustands der Brennkraftmaschine durchführt, wobei das Abgasrückführverfahren **dadurch gekennzeichnet ist, daß** es umfaßt:
Einstellen eines vorbestimmten Parameters auf einen Referenzwert und
Lernen und Korrigieren einer Beziehung zwischen der AGR-Gasmenge, welche durch den anderen AGR-Kanal strömt, und einem Öffnungsgrad einer Einrichtung, die in der Lage ist, die AGR-Gasmenge, welche durch den anderen AGR-Kanal strömt, basierend auf einem vorbestimmten detektierten Wert einzustellen, welcher für die AGR-Gasmenge relevant ist, welche durch den anderen AGR-Kanal strömt, wenn der vorbestimmte Parameter auf den Referenzwert eingestellt ist.

13. Abgasrückführverfahren nach Anspruch 12, wobei der vorbestimmte Parameter, welcher auf den Referenzwert eingestellt wird, der Öffnungsgrad der Einrichtung ist, die in der Lage ist, die AGR-Gasmenge, welche durch den Niederdruck-AGR-Kanal (31) strömt, und/oder die AGR-Gasmenge, welche durch den Hochdruck-AGR-Kanal (41) strömt, einzustellen, und der vorbestimmte detektierte Wert, der für die AGR-Gasmenge relevant ist, welche durch den anderen AGR-Kanal strömt, die Frischluftmenge ist, die von den Ansaugfrischluftmengen-Meßmitteln (7) gemessen wird.

14. Abgasrückführverfahren nach Anspruch 13, wobei, wenn der vorbestimmte Parameter auf den Referenzwert eingestellt ist, der Öffnungsgrad eines AGR-Ventils, das an dem einen AGR-Kanal vorgesehen ist, vollständig geschlossen ist.

15. Abgasrückführverfahren nach Anspruch 12, ferner umfassend:
(S205) Detektieren einer Temperatur einer Ansaugluft, welche das gesamte AGR-Gas und die in die Brennkraftmaschine angesaugte Frischluft enthält,
wobei der vorbestimmte Parameter, welcher auf den Referenzwert eingestellt wird, eine Ansaugmenge und eine AGR-Rate, welche einem Anteil des in der Ansaugluft enthaltenen AGR-Gases entspricht, beinhaltet, und der vorbestimmte detektierte Wert, der für die AGR-Gasmenge relevant ist, welche durch den anderen AGR-Kanal strömt, die Temperatur der Ansaugluft ist, welche das gesamte AGR-Gas und die in die Brennkraftmaschine angesaugte Frischluft enthält.

16. Abgasrückführverfahren nach Anspruch 12, ferner umfassend:
(S305) Detektieren eines Luft-Kraftstoff-Verhältnisses eines Gases, welches die in die Brennkraftmaschine angesaugte Frischluft und das AGR-Gas, welches durch den Niederdruck-AGR-Kanal (31) strömt, enthält, welches jedoch nicht das AGR-Gas enthält, welches durch den Hochdruck-AGR-Kanal (41) strömt,
wobei der vorbestimmte Parameter, welcher auf den Referenzwert eingestellt wird, eine Menge einer Ansaugluft, welche das gesamte AGR-Gas und die in die Brennkraftmaschine angesaugte Frischluft enthält, und eine AGR-Rate, welche einem Anteil des in der Ansaugluft enthaltenen AGR-Gases entspricht, beinhaltet, und der vorbestimmte detektierte Wert, der für die AGR-Gasmenge relevant ist, welche durch den anderen AGR-Kanal strömt, das Luft-Kraftstoff-Verhältnis das Gases ist, welches die in die Brennkraftmaschine angesaugte Frischluft und das AGR-Gas, welches durch den Niederdruck-AGR-Kanal (31) strömt, enthält, welches jedoch nicht das AGR-Gas enthält, welches durch den Hochdruck-AGR-Kanal (41) strömt.

17. Abgasrückführverfahren nach Anspruch 12, ferner umfassend:
(S405) Detektieren einer Druckdifferenz über dem Ventil bei einem AGR-Ventil, das an dem anderen AGR-Kanal vorgesehen ist,
wobei der vorbestimmte Parameter, welcher auf den Referenzwert eingestellt wird, eine Menge einer Ansaugluft, welche das gesamte AGR-Gas und die in die Brennkraftmaschine angesaugte Frischluft enthält, und eine AGR-Rate, welche einem Anteil des in der Ansaugluft enthaltenen AGR-Gases entspricht, beinhaltet, und der vorbestimmte detektierte Wert, der für die AGR-Gasmenge relevant ist, welche durch den anderen AGR-Kanal strömt, die Druckdifferenz über dem Ventil ist, das an dem anderen AGR-Kanal vorgesehen ist.

18. Abgasrückführverfahren nach Anspruch 12, wobei der vorbestimmte Parameter, welcher auf den Referenzwert eingestellt wird, eine Menge einer Ansaugluft, welche das gesamte AGR-Gas und die in die Brennkraftmaschine angesaugte Frischluft enthält, und eine AGR-Rate, welche einem Anteil des in der Ansaugluft enthaltenen AGR-Gases entspricht, beinhaltet, und der vorbestimmte detektierte Wert, der für die AGR-Gasmenge relevant ist, welche durch den anderen AGR-Kanal strömt, der Öffnungsgrad eines AGR-Ventils ist, welches an dem einen AGR-Kanal vorgesehen ist.

19. Abgasrückführverfahren nach Anspruch 12, ferner umfassend:
(S605) Detektieren einer Menge einer Ansaugluft, welche das gesamte AGR-Gas und die in die Brennkraftmaschine angesaugte Frischluft enthält,
wobei der vorbestimmte Parameter, welcher auf den Referenzwert eingestellt wird, den Öffnungsgrad der Einrichtung, die in der Lage ist, die AGR-Gasmenge, welche durch den Niederdruck-AGR-Kanal (31) und/oder den Hochdruck-AGR-Kanal (41) strömt, einzustellen, und eine AGR-Rate, welche einem Anteil des in der Ansaugluft enthaltenen AGR-Gases entspricht, beinhaltet, und der vorbestimmte detektierte Wert, der für die AGR-Gasmenge relevant ist, welche durch den anderen AGR-Kanal strömt, die Ansaugluftmenge ist, welche das gesamte AGR-Gas und die in die Brennkraftmaschine angesaugte Frischluft enthält.

20. Abgasrückführverfahren nach einem der Ansprüche 15 bis 19, wobei, wenn der vorbestimmte Parameter auf den Referenzwert eingestellt ist, der Öffnungsgrad eines AGR-Ventils, das an dem einen AGR-Kanal vorgesehen ist, auf eine mittleren Öffnungsgrad eingestellt ist.

21. Abgasrückführverfahren nach einem der Ansprüche 12 bis 20, wobei in dem Schritt des Lernens und Korrigierens bewirkt wird, daß der vorbestimmte detektierte Wert, der für die AGR-Gasmenge relevant ist, welche durch den anderen AGR-Kanal strömt, gleich dem Referenzwert ist, und eine Größe der Änderung des Öffnungsgrades der Einrichtung, die in der Lage ist, die AGR-Gasmenge einzustellen, welche durch den anderen AGR-Kanal strömt, als ein gelernter Korrekturwert gelernt und korrigiert wird.

22. Abgasrückführverfahren nach einem der Ansprüche 12 bis 21, wobei der eine AGR-Kanal der Hochdruck-AGR-Kanal (41) ist und der andere AGR-Kanal der Niederdruck-AGR-Kanal (31) ist.

## Revendications

1. Dispositif de recyclage des gaz d'échappement dans un moteur à combustion interne, comprenant : un turbocompresseur (5) ayant une turbine (5b) disposée sur un passage d'échappement (4) du moteur à combustion interne et un compresseur (5a) disposé sur un passage d'admission (3) du moteur à combustion interne ; un passage de recyclage de gaz d'échappement (31) à basse pression qui amène une portion des gaz d'échappement depuis le passage d'échappement (4) en aval de la turbine (5b) sous forme de gaz d'échappement recyclés et qui recycle les gaz d'échappement vers le passage d'admission (3) en amont du compresseur (5a) ; un passage de recyclage de gaz d'échappement (41) à haute pression qui amène une portion des gaz d'échappement depuis le passage d'échappement (4) en amont de la turbine (5b) sous forme de gaz d'échappement recyclés et qui recycle les gaz d'échappement vers le passage d'admission (3) en aval du compresseur (5a) ; et des moyens de mesure de quantité d'air frais admis (7) pour mesurer une quantité d'air frais admis dans le moteur à combustion interne, dans lequel le dispositif de recyclage de gaz d'échappement effectue une commande avec rétroaction d'une quantité de gaz d'échappement recyclés qui s'écoulent à travers un passage de recyclage des gaz d'échappement, c'est-à-dire soit le passage de recyclage à basse pression (31) soit le passage de recyclage à haute pression (41) en accord avec la quantité d'air frais mesurée par les moyens de mesure de quantité d'air admis (7), et le dispositif de recyclage et l'échappement effectue une commande en boucle ouverte de la quantité de gaz d'échappement recyclés qui s'écoulent à travers l'autre passage de recyclage en se basant sur un état de fonctionnement du moteur à combustion interne, ledit dispositif de recyclage de gaz d'échappement étant **caractérisé en ce qu'**il comprend : des moyens de correction apprenants pour fixer un paramètre prédéterminé à une valeur de référence, et effectuer un apprentissage et une correction d'une relation entre la quantité de gaz d'échappement recyclés qui s'écoulent à travers l'autre passage de recyclage et un degré d'ouverture d'un appareil capable d'ajuster la quantité de gaz d'échappement recyclés qui s'écoulent à travers l'autre passage de recyclage en se basant sur une valeur détectée prédéterminée qui est pertinente vis-à-vis de la quantité de gaz recyclés qui s'écoulent à travers l'autre passage de recyclage quand le paramètre prédéterminé est fixé à la valeur de référence.

2. Dispositif de recyclage de gaz d'échappement selon la revendication 1, dans lequel le paramètre prédéterminé qui est fixé à la valeur de référence est le degré d'ouverture de l'appareil capable d'ajuster la quantité de gaz recyclés qui s'écoulent à travers le passage de recyclage à basse pression (31) et/ou la quantité de gaz recyclés qui s'écoulent à travers le passage de recyclage à haute pression (41), et la valeur détectée prédéterminée pertinente vis-à-vis de la quantité de gaz recyclés qui s'écoulent à travers l'autre passage de recyclage est la quantité d'air frais mesurée par les moyens de mesure de quantité d'air frais admis (7).

3. Dispositif de recyclage de gaz d'échappement selon la revendication 2, dans lequel, quand le paramètre prédéterminé est fixé à la valeur de référence, le degré d'ouverture d'une vanne de recyclage de gaz d'échappement prévue sur le premier passage de recyclage est totalement fermé.

4. Dispositif de recyclage de gaz d'échappement selon la revendication 1, comprenant en outre :
des moyens de détection de température d'air admis (16) pour détecter une température de l'air admis qui contient la totalité des gaz d'échappement recyclés et l'air frais admis dans le moteur à combustion interne,
dans lequel le paramètre prédéterminé qui est fixé à la valeur de référence inclut une quantité d'admission et un taux de recyclage de gaz d'échappement qui correspond à une proportion des gaz d'échappement recyclés contenus dans l'air admis, et la valeur détectée prédéterminée pertinente vis-à-vis de la quantité des gaz d'échappement recyclés qui s'écoulent à travers l'autre passage de recyclage est la température de l'air admis détectée par les moyens de détection de température d'air admis (16).

5. Dispositif de recyclage de gaz d'échappement selon la revendication 1, comprenant en outre :
des moyens de détection de rapport air/carburant (17) pour détecter un rapport air/carburant d'un gaz qui contient l'air frais admis dans le moteur à combustion interne et les gaz d'échappement recyclés qui s'écoulent à travers le passage de recyclage à basse pression (31), mais qui ne contient pas les gaz d'échappement recyclés qui s'écoulent à travers le passage de recyclage à haute pression (41),
dans lequel le paramètre prédéterminé qui est fixé à la valeur de référence inclut une quantité d'air admis qui contient la totalité des gaz d'échappement recyclés et l'air frais admis dans le moteur à combustion interne, et un taux de recyclage de gaz d'échappement qui correspond à une proportion des gaz d'échappement recyclés contenus dans l'air admis ; et la valeur détectée prédéterminée pertinente vis-à-vis de la quantité de gaz recyclés qui s'écoulent à travers l'autre passage de recyclage est le rapport air/carburant détecté par les moyens de détection de rapport air/carburant (17).

6. Dispositif de recyclage des gaz d'échappement selon la revendication 1, comprenant en outre :
des moyens de détection de pression différentielle (18) pour détecter une pression différentielle de part et d'autre d'une vanne de recyclage de gaz d'échappement prévue sur l'autre passage de recyclage,
dans lequel le paramètre prédéterminé qui est fixé à la valeur de référence inclut une quantité d'air admis qui contient la totalité des gaz d'échappement recyclés et l'air frais admis dans le moteur à combustion interne, et un taux de recyclage qui correspond à une proportion de gaz d'échappement recyclés contenus dans l'air admis ; et la valeur détectée prédéterminée pertinente vis-à-vis de la quantité de gaz recyclés qui s'écoule à travers l'autre passage de recyclage est la pression différentielle de part et d'autre de la vanne détectée par les moyens de détection de pression différentielle (18).

7. Dispositif de recyclage et gaz d'échappement selon la revendication 1, dans lequel le paramètre prédéterminé qui est fixé à la valeur de référence inclut une quantité d'air admis qui contient la totalité des gaz d'échappement recyclés et l'air frais admis dans le moteur à combustion interne, et un taux de recyclage qui correspond à une proportion des gaz d'échappement recyclés contenus dans l'air admis ; et la valeur détectée prédéterminée pertinente vis-à-vis de la quantité de gaz d'échappement recyclés qui s'écoulent à travers l'autre passage de recyclage est le degré d'ouverture d'une vanne de recyclage de gaz d'échappement qui est prévue sur le premier passage de recyclage des gaz d'échappement.

8. Dispositif de recyclage de gaz d'échappement selon la revendication 1, comprenant en outre :
des moyens de détection de quantité d'air admis (12) pour détecter une quantité d'air admis qui contient la totalité des gaz d'échappement recyclés et l'air frais admis dans le moteur à combustion interne,
dans lequel le paramètre prédéterminé qui est fixé à la valeur de référence inclut le degré d'ouverture de l'appareil capable d'ajuster la quantité de gaz d'échappement recyclés qui s'écoulent à travers le passage de recyclage à basse pression (31) et/ou la quantité de gaz recyclés qui s'écoulent à travers le passage de recyclage à haute pression (41), et un taux de recyclage qui correspond à une proportion des gaz d'échappement recyclés contenus dans l'air admis ; et la valeur détectée prédéterminée pertinente vis-à-vis de la quantité de gaz d'échappement recyclés qui s'écoulent à travers l'autre passage de recyclage est la quantité d'air admis détectée par les moyens de détection de quantité d'air admis (12).

9. Dispositif de recyclage de gaz d'échappement selon l'une quelconque des revendications 4 à 8, dans lequel quand le paramètre prédéterminé est fixé à la valeur de référence, le degré d'ouverture d'une vanne de recyclage de gaz d'échappement prévue dans le premier passage de recyclage est fixé à un degré d'ouverture intermédiaire.

10. Dispositif de recyclage de gaz d'échappement selon l'une quelconque des revendications 1 à 9, dans lequel les moyens de correction apprenants amènent la valeur détectée prédéterminée pertinente vis-à-vis de la quantité de gaz d'échappement recyclés qui s'écoulent à travers l'autre passage de recyclage à être égale à la valeur de référence, et ces moyens procèdent à un apprentissage et à une correction, en tant que valeur de correction apprise, d'une amplitude de changement dans le degré d'ouverture de l'appareil capable d'ajuster la quantité de gaz d'échappement recyclés qui s'écoulent à travers l'autre passage de recyclage.

11. Dispositif de recyclage de gaz d'échappement selon l'une quelconque des revendications 1 à 10, dans lequel le premier passage de recyclage est le passage de recyclage à haute pression (41), et l'autre passage de recyclage est le passage de recyclage à basse pression (31).

12. Procédé de recyclage de gaz d'échappement dans un moteur à combustion interne, dans lequel le moteur à combustion interne inclut :
un turbocompresseur (5) ayant une turbine (5b) disposée sur un passage d'échappement (4) du moteur à combustion interne et un compresseur (5a) disposé sur un passage d'admission (3) du moteur à combustion interne, un passage de recyclage de gaz d'échappement (31) à basse pression qui amène une portion des gaz d'échappement provenant du passage d'échappement (15) en aval de la turbine (5b) sous forme de gaz d'échappement recyclés et qui recycle des gaz d'échappement recyclés vers le passage d'admission (3) en amont du compresseur (5a); un passage de recyclage de gaz d'échappement à haute pression (41) qui admet une portion des gaz d'échappement provenant du passage d'échappement (4) en amont de la turbine (5b) sous forme de gaz d'échappement recyclés et qui recycle les gaz d'échappement recyclés vers le passage d'admission (3) en aval du compresseur (5a) ; et des moyens de mesure de quantité d'air frais admis (7) pour mesurer une quantité d'air frais admise au moteur à combustion interne, dans lequel le moteur à combustion interne effectue une commande avec rétroaction d'une quantité de gaz d'échappement recyclés qui s'écoulent à travers un passage de recyclage, c'est-à-dire soit le passage de recyclage à basse pression (31) soit le passage de recyclage à haute pression (41) en accord avec la quantité d'air frais mesurée par les moyens de mesure de quantité d'air frais admis (7), et effectue une commande en boucle ouverte de la quantité de gaz d'échappement recyclés qui s'écoulent à travers l'autre passage de recyclage en se basant sur un état de fonctionnement du moteur à combustion interne, le procédé de recyclage de gaz d'échappement étant **caractérisé en ce qu'**il comprend :
de fixer un paramètre prédéterminé à une valeur de référence ; et
d'apprendre et de corriger une relation entre la quantité de gaz d'échappement recyclés qui s'écoulent à travers l'autre passage de recyclage et un degré d'ouverture d'un appareil capable d'ajuster la quantité de gaz d'échappement recyclés qui s'écoulent à travers l'autre passage de recyclage en se basant sur une valeur détectée prédéterminée qui est pertinente vis-à-vis de la quantité de gaz d'échappement recyclés qui s'écoulent à travers l'autre passage de recyclage quand le paramètre prédéterminé est fixé à la valeur de référence.

13. Procédé de recyclage de gaz d'échappement selon la revendication 12, dans lequel le paramètre prédéterminé qui est fixé à la valeur de référence est le degré d'ouverture de l'appareil capable d'ajuster la quantité de gaz d'échappement recyclés qui s'écoulent à travers le passage de recyclage à basse pression (31) et/ou le passage de recyclage (41) à haute pression, et la valeur détectée prédéterminée pertinente vis-à-vis de la quantité de gaz d'échappement recyclés qui s'écoulent à travers l'autre passage de recyclage est la quantité d'air frais mesurée par les moyens de mesure de quantité d'air frais admis (7).

14. Procédé de recyclage de gaz d'échappement selon la revendication 13, dans lequel, quand le paramètre prédéterminé est fixé à la valeur de référence, le degré d'ouverture d'une vanne de recyclage des gaz d'échappement prévue sur le premier passage de recyclage est totalement fermé.

15. Procédé de recyclage de gaz d'échappement selon la revendication 12, comprenant en outre :
(S205) de détecter une température de l'air admis qui contient la totalité des gaz d'échappement recyclés et l'air frais admis dans le moteur à combustion interne,
dans lequel le paramètre prédéterminé qui est fixé à la valeur de référence inclut une quantité d'admission et un taux de recyclage des gaz d'échappement qui correspond à une proportion des gaz d'échappement recyclés contenus dans l'air admis, et la valeur détectée prédéterminée pertinente vis-à-vis de la quantité des gaz d'échappement recyclés qui s'écoulent à travers l'autre passage de recyclage est la température de l'air admis qui contient la totalité des gaz d'échappement recyclés et l'air frais admis dans le moteur à combustion interne.

16. Procédé de recyclage de gaz d'échappement selon la revendication 12, comprenant en outre :
(S305) de détecter un rapport air/carburant d'un gaz qui contient l'air frais admis dans le moteur à combustion interne et les gaz d'échappement recyclés qui s'écoulent à travers le passage de recyclage à basse pression (31) mais qui ne contient pas les gaz d'échappement recyclés qui s'écoulent à travers le passage de recyclage à haute pression (41),
dans lequel le paramètre prédéterminé qui est fixé à la valeur de référence inclut une quantité d'air admis qui contient la totalité des gaz d'échappement recyclés et l'air frais admis dans le moteur à combustion interne, et un taux de recyclage de gaz d'échappement qui correspond à une proportion des gaz d'échappement recyclés contenus dans l'air admis ; et la valeur détectée prédéterminée pertinente vis-à-vis de la quantité de gaz d'échappement recyclés qui s'écoulent à travers l'autre passage de recyclage est le rapport air/carburant du gaz qui contient l'air frais admis dans le moteur à combustion interne et les gaz d'échappement recyclés qui s'écoulent à travers le passage de recyclage à basse pression (31), mais qui ne contient pas les gaz d'échappement recyclés qui s'écoulent via le passage (41) à haute pression.

17. Procédé de recyclage de gaz d'échappement selon la revendication 12, comprenant en outre :
(S405) de détecter une pression différentielle de part et d'autre d'une vanne de recyclage de gaz d'échappement prévue sur l'autre passage de recyclage de gaz d'échappement,
dans lequel le paramètre prédéterminé qui est fixé à la valeur de référence inclut une quantité d'air admis qui contient la totalité des gaz d'échappement recyclés et l'air frais admis dans le moteur à combustion interne, et un taux de recyclage de gaz d'échappement qui correspond à une proportion des gaz d'échappement recyclés contenus dans l'air admis ; et la valeur détectée prédéterminée pertinente vis-à-vis de la quantité des gaz d'échappement recyclés qui s'écoulent à travers l'autre passage de recyclage des gaz d'échappement est la pression différentielle de part et d'autre de la vanne, prévue sur l'autre passage de recyclage des gaz d'échappement.

18. Procédé de recyclage de gaz d'échappement selon la revendication 12, dans lequel le paramètre prédéterminé qui est fixé à la valeur de référence inclut une quantité d'air admis qui contient la totalité des gaz d'échappement recyclés et l'air frais admis dans le moteur à combustion interne ; et un taux de recyclage des gaz d'échappement qui correspond à une proportion des gaz d'échappement recyclés contenus dans l'air admis, et la valeur détectée prédéterminée pertinente vis-à-vis de la quantité de gaz d'échappement recyclés qui s'écoulent à travers l'autre passage de recyclage est le degré d'ouverture d'une vanne de recyclage des gaz d'échappement qui est prévue dans le premier passage de recyclage.

19. Procédé de recyclage de gaz d'échappement selon la revendication 12, comprenant en outre :
(S605) de détecter une quantité d'air admis qui contient la totalité des gaz d'échappement recyclés et l'air frais admis dans le moteur à combustion interne,
dans lequel le paramètre prédéterminé qui est fixé à la valeur de référence inclut le degré d'ouverture de l'appareil capable d'ajuster la quantité des gaz d'échappement recyclés qui s'écoulent à travers le passage de recyclage à basse pression (31) et/ou le passage de recyclage à haute pression (41), et un taux de recyclage qui correspond à une proportion des gaz d'échappement recyclés contenus dans l'air admis ; et la valeur détectée prédéterminée pertinente vis-à-vis de la quantité des gaz d'échappement recyclés qui s'écoulent à travers l'autre passage de recyclage de gaz d'échappement est la quantité d'air admis qui contient la totalité des gaz d'échappement recyclés et l'air frais admis dans le moteur à combustion interne.

20. Procédé de recyclage de gaz d'échappement selon l'une quelconque des revendications 15 à 19, dans lequel quand le paramètre prédéterminé est fixé à la valeur de référence, le degré d'ouverture d'une vanne de recyclage de gaz d'échappement prévue dans le premier passage de recyclage est fixé à un degré d'ouverture intermédiaire.

21. Procédé de recyclage de gaz d'échappement selon l'une quelconque des revendications 12 à 20, dans lequel, dans l'étape d'apprentissage et de correction, la valeur détectée prédéterminée pertinente vis-à-vis de la quantité des gaz d'échappement recyclés qui s'écoulent à travers l'autre passage de recyclage est amenée à être égale à la valeur de référence, et une amplitude de changement du degré d'ouverture de l'appareil capable d'ajuster la quantité des gaz d'échappement recyclés qui s'écoulent à travers l'autre passage de recyclage est apprise et corrigée en tant que valeur de correction apprise.

22. Procédé de recyclage de gaz d'échappement selon l'une quelconque des revendications 12 à 21, dans lequel le premier passage de recyclage est le passage de recyclage à haute pression (41) et l'autre passage de recyclage est le passage de recyclage à basse pression (31).
